# EUROPÄISCHE PATENTSCHRIFT

(11) **EP 1 016 807 B1**
(45) Veröffentlichungstag und Bekanntmachung des Hinweises auf die Patenterteilung: **06.05.2004**
(21) Anmeldenummer: 99126077.9
(22) Anmeldetag: 28.12.1999
(51) Int. Cl.: F16H 25/22

(54) **Wälzkörpergewindetrieb und Verfahren zu dessen Montage**
Rolling element screw drive and assembly method thereof
Entraînement fileté à éléments de roulement et sa méthode de montage

(30) Priorität: 29.12.1998 DE 19860643
(43) Veröffentlichungstag der Anmeldung: 05.07.2000
(73) Patentinhaber: Rexroth Star GmbH, 97424 Schweinfurt (DE)
(72) Erfinder: Blaurock, Werner, Dipl.-Ing. (FH), 97464 Niederwerrn (DE); Greubel, Roland, Dipl.-Ing. (FH), 97729 Ramsthal (DE); Och, Hugo, Ing., 97228 Rottendorf (DE); Blattner, Peter, 97497 Dingolshausen (DE)
(74) Vertreter: Herzog, Markus, Dipl.-Phys. Dr.

(56) Entgegenhaltungen:
- DE-A- 2 349 958
- DE-A- 3 207 566
- FR-A- 2 394 724

## Beschreibung

Die Erfindung betrifft einen Wälzkörpergewindetrieb, insbesondere einen Kugelgewindetrieb, umfassend die Merkmale des Oberbegriffs von Anspruch 1.

Derartige Wälzkörpergewindetriebe werden beispielsweise zum schnellen und genauen Positionieren von Werkzeug- und Werkstückträgern sowie zum Verfahren derselben mit definierten Geschwindigkeiten eingesetzt. Dabei wird eine Drehbewegung der Gewindespindel in eine Linearbewegung der geführten Doppelmutter umgesetzt. Um bei der Umkehr der Bewegungsrichtung der Doppelmutter möglichst hohen Genauigkeitsanforderungen genügen zu können, ist es erforderlich, daß die Doppelmutter auf der Spindel möglichst spielfrei angeordnet ist. Hierzu werden die beiden Muttern bei der Montage auf der Spindel so weit aufeinander zugedreht, bis sie sich mit ihren einander zugewandten Stirnflächen aneinander abstützen. Weiteres Verdrehen der Muttern führt dazu, daß die Wälzkörper an einander entgegengesetzten Flankenflächen der Laufbahnen der Muttern anliegen, was letztenendes die gewünschte Vorspannung der beiden Muttern relativ zur Gewindespindel und die im wesentlichen spielfreie Führung der Doppelmutter auf der Gewindespindel zur Folge hat.

Ein bekannter Wälzkörpergewindetrieb, d.h. ein Wälzkörpergewindetrieb, bei welchem das Spiel bzw. die Vorspannung der beiden Einzelmuttern bezüglich der Gewindespindel wie bei dem erfindungsgemäßen Wälzkörpergewindetrieb stufenlos eingestellt werden kann, ist beispielsweise aus der DE-A-21 35 812 bekannt. In einem mit einer der Einzelmuttern drehfest verbundenen Zwischenenelement des bekannten Wälzkörpergewindetriebs ist ein Schraubbolzen aufgenommen, der mit einem an der anderen Einzelmutter drehfest angebrachten Teil in Schraubeingriff steht. Der so gebildete Schneckentrieb gestattet eine stufenlose Verdrehung der beiden Einzelmuttern relativ zueinander um die Spindelachse. Zum einen muß für den Schneckentrieb relativ viel Bauraum vorgesehen werden, insbesondere in radialer Richtung. Weiterhin kann aber auch, trotz der Schneckentrieben inhärenten Selbsthemmung, die eingestellte gewünschte Vorspannung sich in unerwünschter Weise selbsttätig wieder verstellen, beispielsweise infolge von Vibrationen, welche zu einem Verdrehen des Schraubbolzens des Schneckentriebs führen.

Ein ähnlich aufgebauter und auf die Merkmale des Oberbegriffs von Anspruch 1 lesbarer Wälzkörpergewindetrieb ist ferner aus der DE-A-23 49 958 bekannt, bei dem die starre Verbindung über eine Preßpassung erfolgt.

Aus der DE-A-23 49 958 und der DE 30 38 774 C2 sowie der hierzu korrespondierenden EP 0 049 903 B1 sind darüber hinaus weitere Wälzkörpergewindetriebe bekannt, bei welchen ein Zwischenelement zur Verhinderung einer Relativverdrehung der beiden Muttern sowohl mit der einen Einzelmutter als auch mit der anderen Einzelmutter in Reibeingriff steht. Somit die Reibungskräfte bereits bei der Montage, d.h. bei der Relativverdrehung der beiden Einzelmuttern zur Einstellung der gewünschten Vorspannung bzw. des gewünschten Spiels, überwunden werden. Dies erschwert die exakte Einstellung des Spiels bzw. der Vorspannung auf den gewünschten Wert beträchtlich.

Des weiteren sind aus der DE 24 53 635 C3, der DE-A-25 33 996 und der DE 29 40 762 C2 Wälzkörpergewindetriebe bekannt, bei welchen die beiden Einzelmuttern nicht stufenlos, sondern lediglich in vorbestimmten Winkelschritten relativ zueinander verdreht und fixiert werden können.

Bei dem aus dem DE-U-77 08 184 bekannten Wälzkörpergewindetrieb ist eine stufenlose Verdrehung der beiden Einzelmuttern nur in einem sehr engen Winkelbereich möglich. Zur Einstellung einer gewünschten Vorspannung bzw. eines gewünschten Spiels bezüglich der Gewindespindel ist es daher zusätzlich erforderlich, zwischen den beiden Einzelmuttern Distanzstücke vorzusehen, deren Dicke auf die gewünschte Vorspannung bzw. das gewünschte Spiel abgestimmt sein muß. Bei der Montage ist es daher auch bei Einsatz erfahrenen Personals üblicherweise erforderlich, die Distanzstücke mehrmals auszuwechseln, bis dasjenige Distanzstück mit der für die gewünschte Vorspannung bzw. das gewünschte Spiel passenden Dicke gefunden ist. Die Montage des aus dem DE-U-77 08 184 bekannten Wälzkörpergewindetriebs ist daher umständlich und zeitaufwendig.

Gemäß der DE 37 00 693 C2 wird ein zwischen den beiden aneinander anliegenden Stirnflächen der Einzelmuttern von Ringnuten und Einschnitten gebildeter Hohlraum zur Bildung des Zwischenelements mit Vergußmasse gefüllt. Die der gewünschten Vorspannung bzw. dem gewünschten Spiel entsprechende Relativverdrehungsstellung der beiden Einzelmuttern muß daher bis zum vollständigen Aushärten der Vergußmasse aufrechterhalten werden.

Aus der DE 42 08 126 A1 ist ein Wälzkörpergewindetrieb bekannt, bei welchem die beiden Einzelmuttern über ein in Richtung der Spindelachse federnd nachgiebiges Zwischenelement miteinander verbunden sind.

Bei einer derartigen axial federnden Anordnung können sich die beiden Einzelmuttern dann, wenn auf eine der Einzelmuttern eine die Federkraft übersteigende Kraft ausgeübt wird, aufeinander zu bewegen, wodurch die gewünschte Vorspannung verloren geht.

Darüber hinaus sei noch auf die DE 32 07 566 A1 verwiesen, bei welcher nach dem Einstellen der gewünschten Vorspannung der beiden Einzelmuttern in deren gemeinsamen Kontaktbereich eine Aufnahmebohrung für einen radialen Sperrbolzen eingebracht wird, welcher die Aufrechterhaltung der erzielten Vorspannung sichert.

Ein weiterer Gewindespindeltrieb mit flexibel gekoppelten Muttern ist aus der FR-A-2 394 724 bekannt, bei dem ein Federbalg an die Muttern angeschweißt ist.

Es ist daher Aufgabe der Erfindung, einen Wälzkörpergewindetrieb der eingangs genannten Art anzugeben, der bei einfachem konstruktivem Aufbau und einfachem Montageablauf ohne weiteres eine stufenlose und exakte Einstellung des Spiels bzw. der Vorspannung der Einzelmuttern bezüglich der Schraubspindel auf einen gewünschten Wert ermöglicht.

Diese Aufgabe wird erfindungsgemäß durch einen Wälzkörpergewindetrieb mit den Merkmalen des Anspruchs 1 gelöst.

Es sei bereits an dieser Stelle darauf hingewiesen, daß die Grenze zwischen einer unmittelbaren Verbindung der beiden Einzelmuttern einerseits und der Verbindung eines mit einer der Einzelmuttern einstückig ausgebildeten Zwischenelements mit der jeweils anderen Einzelmutter andererseits in der Praxis einen fließenden Übergang darstellt, bei welchem nicht in jedem Falle entschieden werden kann, welcher der genannten Extremfälle vorliegt. Grundsätzlich kann nämlich jeder Bereich der Einzelmuttern, der der Verbindung mit der jeweils anderen Einzelmutter dient, als ein Zwischenelement verstanden werden, und das auch dann, wenn dieses Zwischenelement nicht als gesondert gestalteter Bereich der betreffenden Einzelmutter ausgebildet ist.

Zur drehfesten Verbindung der beiden Einzelmuttern bzw. des Zwischenelements und der zweiten Einzelmutter wird letztere zunächst durch Verdrehen auf der Gewindespindel in Anlage an die erste Einzelmutter bzw. das Zwischenelement gebracht. Durch weiteres Verdrehen der beiden Einzelmuttern wird dann das gewünschte Spiel bzw. die gewünschte Vorspannung der beiden Einzelmuttern bezüglich der Gewindespindeln eingestellt. Die einzigen hierbei auftretenden Reibungskräfte zwischen dem Zwischenelement und der Mutter rühren dabei von der Vorspannung selbst her. Hat das Spiel bzw. die Vorspannung den gewünschten Wert erreicht, so wird die erste Einzelmutter bzw. das Zwischenelement mit der zweiten Einzelmutter bzw. einem mit dieser verbundenen Teil verschweißt. In Man erhält eine sichere drehfeste Verbindung, die eine sofortige Weiterverarbeitung des Wälzkörpergewindetriebs erlaubt. Zudem ist eine spätere unbeabsichtigte Verdrehung der beiden Einzelmuttern relativ zueinander mit hieraus resultierender Verstellung des gewünschten Spiels bzw. der gewünschten Vorspannung zuverlässig ausgeschlossen.

Auf den Einsatz von Schweißverbindungen bei dem erfindungsgemäßen Wälzkörperschraubtrieb bzw. im Rahmen des erfindungsgemäßen Verfahrens wird weiter unten noch ausführlich eingegangen werden.

Vorteilhafte Ausgestaltungen des erfindungsgemäßen Wälzkörpergewindetriebs sind in den abhängigen Ansprüchen aufgeführt.

Um die erste Einzelmutter bzw. das Zwischenelement wieder von der zweiten Einzelmutter trennen zu können, wird vorgeschlagen, daß die erste Einzelmutter bzw. das Zwischenelement mit wenigstens einem Paßteil verschweißt ist, das an der zweiten Einzelmutter lösbar befestigt, beispielsweise mittels eines Schraubbolzens mit dieser verschraubt ist. Nach dem Lösen des Schraubbolzens kann das Paßteil beispielsweise mittels eines Werkzeugs von der zweiten Einzelmutter abgehebelt und somit die Verschweißung des Paßteils mit der ersten Einzelmutter bzw. dem Zwischenelement gebrochen werden. Nach dem Glätten der Bruchstelle können die Einzelmuttern bzw. das Zwischenelements problemslos weiterverwendet und mit einem anderen Paßteil nach Einstellung des Spiels bzw. der Vorspannung auf einen gewünschten Wert erneut verschweißt werden. Alternativ ist es jedoch auch möglich, die Doppelmutter auf eine Hilfsspindel mit glatter Oberfläche, d.h. eine Hilfspindel ohne sich schraubenförmig fortsetzende Laufbahn, zu überführen. Auf dieser glatten Hilfsspindel kann die zweite Einzelmutter nach dem Lösen des Schraubbolzens in axialer Richtung von dem mit der ersten Einzelmutter oder dem Zwischenelement verschweißten Paßteil abgezogen werden, ohne die Schweißnaht zerstören zu müssen.

Zur Erleichterung des vorstehend angesprochenen Abhebelns des Paßteils von der zweiten Einzelmutter kann vorgesehen sein, daß der lichte Durchmesser des das Paßteil durchsetzenden Durchgangslochs größer ist als der Außendurchmesser des Schraubbolzens und daß das Durchgangsloch mit einem Innengewinde versehen ist. In diesem Fall kann in das Gewindeloch ein Schraubbolzen eingeschraubt werden, dessen Außendurchmesser größer ist als der Außendurchmesser des zur Befestigung des Paßteils an der zweiten Einzelmutter dienenden Schraubbolzens. Dieser "Lösebolzen" hebelt mit zunehmendem Einschrauben in das Gewindeloch das Paßteil von der zweiten Einzelmutter ab, wobei dieser Vorgang aufgrund des von dem Gewinde herrührenden großen Übersetzungseingriffs in äußerst kontrollierter Weise vonstatten geht. Dies ist insbesondere dann von Vorteil, wenn das Paßteil zur sicheren Verbindung mit der ersten Einzelmutter bzw. dem Zwischenelement längs einer vorbestimmten Strecke im wesentlichen bündig an diesem anliegt und vorzugsweise längs dieser gesamten Strecke mit der ersten Einzelmutter bzw. dem Zwischenelement verschweißt ist.

Alternativ zur Schweißverbindung mit einem Paßteil ist es auch möglich, daß die erste Einzelmutter oder das Zwischenelement mit der zweiten Einzelmutter längs wenigstens eines Teils der, vorzugsweise längs im wesentlichen der gesamten, von außen sichtbaren Kontaktlinie zwischen diesen Bauteilen verschweißt ist. In diesem Fall ist jedoch eine zerstörungsfreie Demontage der ersten Einzelmutter bzw. des Zwischenelements und der zweiten Einzelmutter nicht möglich. Diese Ausführungsform eignet sich jedoch aufgrund der geringeren Teilezahl und der aus diesem Grund möglichen kostengünstigen Herstellung und Montage insbesondere für Einsatzzwecke mit geringem Beschädigungsrisiko.

In bestimmten Anwendungsfällen kann es von Vorteil sein, wenn die erste Einzelmutter bzw. das Zwischenelement mit der zweiten Einzelmutter zusätzlich verklebt ist, vorzugsweise unter Einsatz eines doppelseitigen Klebebandes. Für diese Anwendung geeignete Klebebänder mit aushärtenden Kunstharzen sind beispielsweise unter der Bezeichnung SCOTCHTM VHBTM erhältlich.

Nachzutragen ist noch, daß zur Verbindung der zweiten Einzelmutter mit der ersten Einzelmutter bzw. dem Zwischenelement selbstverständlich auch eine Mehrzahl von mit der ersten Einzelmutter bzw. dem Zwischenelement verschweißten Paßteilen sein kann.

Wie vorstehend bereits angedeutet, sind verschiedene Möglichkeiten der Verbindung des Zwischenelements mit der ersten Einzelmutter denkbar: So kann das Zwischenelement sowohl einstückig an der ersten Einzelmutter angeformt als auch als von der ersten Einzelmutter gesondertes Element ausgebildet sein. Im erstgenannten Fall ergibt sich eine besonders stabile drehfeste Verbindung des Zwischenelements mit der ersten Einzelmutter, die allerdings die zerstörungsfreie Demontage der Wälzkörpergewindetrieb-Doppelmutter auf der Gewindespindel erschwert.

Im Falle der Ausbildung des Zwischenelements als gesondertes Element ergeben sich wiederumverschiedene Möglichkeiten der drehfesten Fixierung des Zwischenelements an der ersten Einzelmutter:

Beispielsweise kann das Zwischenelement mit der ersten Einzelmutter durch Preßpassung verbunden sein. Zusätzlich oder alternativ ist es möglich, das Zwischenelement mit der ersten Einzelmutter zu verkleben, vorzugsweise unter Einsatz eines doppelseitigen Klebebands, wie es vorstehend für die Verbindung des Zwischenelements mit der zweiten Einzelmutter bereits angesprochen worden ist.

Zur formschlüssigen Verbindung des Zwischenelements mit der ersten Einzelmutter kann vorgesehen sein, daß das Zwischenelement relativ zur ersten Einzelmutter durch wenigstens ein weiteres Paßteil drehfest gehalten ist, welches mit einem der beiden Bauteile, Zwischenelement oder erste Einzelmutter, verbunden oder einstückig ausgebildet ist und jeweils in eine am jeweils anderen der beiden Bauteile, erste Einzelmutter oder Zwischenelement, vorgesehene Ausnehmung eingreift.

Dabei kann das weitere Paßteil in einer ersten alternativen Weiterbildung der formschlüssigen Verbindung von einem Umfangsabschnitt des Zwischenelements gebildet sein, welcher in einer Ausnehmung der ersten Einzelmutter eingedrückt ist. Gemäß einer zweiten Alternative ist es jedoch ebenso möglich, daß das weitere Paßteil als gesondertes Bauteil ausgebildet und an der ersten Einzelmutter lösbar befestigt ist, beispielsweise mittels eines Schraubbolzens mit dieser verschraubt ist. Zu den Vorteilen dieser beiden alternativen Verbindungsarten sei auf die vorstehende Diskussion der verschiedenen Möglichkeiten der Verbindung des Zwischenelements mit der zweiten Einzelmutter verwiesen. Insbesondere ist es bei Einsatz eines mit der ersten Einzelmutter verschraubbaren weiteren Paßteils wiederum möglich, daß der lichte Durchmesser des das weitere Paßteil durchsetzenden Durchgangslochs größer ist als der Außendurchmesser des Schraubbolzens und daß das Durchgangsloch mit einem Innengewinde versehen ist.

Wiederum ist es möglich, daß zur Verbindung der ersten Einzelmutter mit dem Zwischenelement eine Mehrzahl von weiteren Paßteilen auf dem gesamten Umfang verteilt angeordnet ist.

Eine weitere Möglichkeit der Verbindung des Zwischenelements mit der ersten Einzelmutter besteht darin, daß das Zwischenelement auf die erste Einzelmutter aufgeschraubt bzw. in diese eingeschraubt ist, beispielsweise mittels eines Feingewindes. Für die betriebsmäßige drehfeste Verbindung von Zwischenelement und erster Einzelmutter ist es dabei entscheidend, daß sich die Steigung oder/und der Drehsinn der Schraubverbindung von Zwischenelement und erster Einzelmutter von jenen der Gewindespindel unterscheidet.

Schließlich ist es auch möglich, das Zwischenelement mit der ersten Einzelmutter längs wenigstens eines Teils der, vorzugsweise längs im wesentlichen der gesamten, von außen sichtbaren Kontaktlinie zwischen diesen beiden Bauteilen, zu verschweißen.

Zur Erleichterung einer reproduzierbaren präzisen Montage des erfindungsgemäßen Wälzkörpergewindetriebs wird in Weiterbildung der Erfindung vorgeschiagen, daß das Zwischenelement an wenigstens einer der Einzelmuttern, vorzugsweise beiden Einzelmuttern, oder daß die beiden Einzelmuttern relativ zueinander bezüglich der Spindelachse zentriert angeordnet ist.

Zur Erhöhung der Stabilität des Wälzkörpergewindetriebs, aber auch zur Sicherstellung hoher Fertigungspräzision, wird ferner vorgeschlagen, daß das Zwischenelement von einem geschlossenen Ringelement gebildet ist.

Zur Bereitstellung eines kostengünstig herstellbaren erfindungsgemäßen Wälzkörpergewindetriebs ist es jedoch auch möglich, daß das Zwischenelement von einem geschlitzten Ringelement gebildet ist, wobei das geschlitzte Ringelement beispielsweise von einem ringförmig gebogenen Blechstreifen gebildet sein kann. Die beiden an den Schlitz angrenzenden Endbereiche des Blechstreifens können an wenigstens einer der beiden Einzelmuttern durch Schweißen festgelegt sein, um so ein betriebsmäßig im wesentlichen starres Ringelement zu erhalten. Die Befestigung des geschlitzten Ringelements an wenigstens einer beiden Einzelmuttern kann kostengünstig beispielsweise durch Punktschweißen erfolgen. Bevorzugt ist es jedoch, wenn der Schlitz des Zwischenelements mittels Schweißen geschlossen ist.

Um einen gewissen Toleranzausgleich bereitstellen zu können, wird vorgeschlagen, daß das Zwischenelement einen Elastizitätsbereich aufweist, der ein Verkippen der beiden Einzelmuttern relativ zueinander um zur Spindelachse im wesentlichen orthogonale Achsen zuläßt, während er die beiden Einzelmuttern in axialer Richtung im wesentlichen starr verbindet, d.h. insbesondere einen Elastizitätsbereich, der in begrenztem Umfang lediglich Schwenkbewegungen der beiden Einzelmuttern relativ zueinander um orthogonal zur Spindelachse verlaufende Achsen erlaubt.

In Weiterbildung der Erfindung wird vorgeschlagen, daß wenigstens eines von zwei miteinander zu verbindenden Bauteilen, d.h. erste Einzelmutter oder Zwischenelement bzw. zweite Einzelmutter oder Zwischenelement bzw. eine der beiden Einzelmuttern, zumindest in einem zur Verbindung mit dem jeweils anderen Bauteil bestimmten Bereich aus weichem, d.h. nicht gehärtetem, Stahl gefertigt ist. Diese weichen Bereiche können auch von den Endbenutzern in einfacher Weise bearbeitet werden. Beispielsweise können in diese weichen Bereiche auch mit handelsüblichen Werkzeugen Gewindebohrungen eingebracht werden, was einen in hohem Maße flexiblen Einbau der erfindungsgemäßen Wälzkörpergewindetriebe in übergeordnete Strukturen ermöglicht. Überdies können die weichen Bereiche des einen Bauteils in zugeordnete Ausnehmungen des anderen Bauteils eingedrückt werden, um die beiden Bauteile miteinander zu verbinden.

Insbesondere im Hinblick auf die vorstehend angesprochene Möglichkeit, die Bauteile des erfindungsgemäßen Wälzkörpergewindetriebs durch Schweißen miteinander zu verbinden, wird weiter vorgeschlagen, daß die weichen Bereiche aus einem schweißbaren Stahl, beispielsweise aus einem Stahl mit niedrigem Kohlenstoff-Gehalt, gefertigt sind. War man bislang im Stand der Technik davon ausgegangen, daß zur Ermöglichung eines Verschweißens zweier Bauteile eines Wälzkörpergewindetriebs diese beiden Bauteile aus einem Stahl niedrigen Kohlenstoff-Gehalts gefertigt sein müssen, so haben entsprechende Versuche im Hause der Anmelderin gezeigt, daß eine qualitativ zufriedenstellende Schweißverbindung auch dann erhalten werden kann, wenn lediglich eines der beiden Bauteile aus einem Stahl mit niedrigem Kohlenstoff-Gehalt gefertigt ist, während das jeweilige Gegenstück aus einem Stahl mit hohem Kohlenstoff-Gehalt gefertigt ist. Beispielsweise kann also das Zwischenelement aus einem Stahl mit niedrigem Kohlenstoff-Gehalt gefertigt sein, während die beiden Einzelmuttern aus einem harten Stahl mit hohem Kohlenstoff-Gehalt gefertigt sind.

Diese Erkenntnis ist insbesondere auch deshalb von Vorteil, weil hierdurch in vielen Fällen die Verwendung von einsatzgehärteten Einzelmuttern vermieden werden kann, d.h. von Einzelmuttern, derer Wälzkörperlauffläche durch Aufkohlen gehärtet ist - und somit einen hohen Kohlenstoff-Gehalt aufweist - und von einem äußeren Mantelbereich aus einem weicheren Stahl mit niedrigem Kohlenstoff-Gehalt umgeben ist. Aufgrund des vorstehend geschilderten Aufbaus ist die Herstellung einsatzgehärteter Muttern relativ aufwendig und somit kostenträchtig. Aus den vorstehend erläuterten Gründen wird für den Gedanken der Schweißverbindung zweier Bauteile eines Wälzkörpergewindetriebs, von denen lediglich eines aus einem Stahl mit niedrigem Kohlenstoff-Gehalt gefertigt ist, unabhängiger Schutz angestrebt.

Gleichwohl soll die Verwendung einsatzgehärteter Einzelmuttern nicht ausgeschlossen sein. Das Vorsehen zumindest einer einsatzgehärteten Einzelmutter kann beispielsweise dann sinnvoll sein, wenn das Zwischenelement einstückig an einer der beiden Einzelmuttern angeformt ist und diese durch Verschweißen oder Eindrücken mit der jeweils anderen Einzelmutter verbunden werden soll. Bei einer einsatzgehärteten Einzelmutter für diesen Verwendungszweck ist dann der Bereich, der verschweißt oder eingedrückt wird, nicht aufgekohlt. Neben dem Einsatzhärten können die Spindellaufflächen der Einzelmuttern auch induktionsgehärtet sein. Dieses Härtungsverfahren, bei welchem dem zu härtenden Stahl kein Kohlenstoff zugeführt wird, sondern er lediglich induktiv erwärmt wird, eignet sich insbesondere für den Einsatz bei Einzelmuttern, die insgesamt aus kohlenstoff-reichen Stahl bestehen. Infolge des hohen Kohlenstoff-Gehalts auch des die Spindellauffläche umgebenden äußeren Mantelbereichs können induktionsgehärtete Einzelmuttern zwar nicht unmittelbar miteinander verschweißt werden. Jedoch bleibt der äußere Mantelbereich bei der Induktionshärtung weich, so daß die Einzelmuttern mittels des vorstehend beschriebenen Eindrück-Verfahrens miteinander verbunden werden können.

Zur Herstellung der Schweißverbindung sind beispielsweise Laser-Schweißverfahren geeignet. Diese haben zum einen den Vorteil, daß beim Schweißen von außen kein Material zugeführt werden muß, beispielsweise in Form eines Schweißdrahts. Vielmehr genügt es, wenn die beiden miteinander zu verschweißenden Teile bündig aneinander anliegen. Zum anderen haben Laser-Schweißverfahren den Vorteil, daß der Laserstrahl mit einfachen optischen Mitteln geteilt werden kann, so daß zwei zueinander parallel verlaufende Schweißnähte gleichzeitig hergestellt werden können. Dies ist insbesondere dann günstig, wenn das Zwischenelement mit beiden Einzelmuttern jeweils durch eine Schweißnaht drehfest verbunden ist. Beim Verschweißen eines Bauteils aus einem Stahl mit hohem Kohlenstoff-Gehalt mit einem Bauteil aus einem Stahl mit niedrigem Kohlenstoff-Gehalt bilden sich in der Schweißnaht Zonen variierenden Kohlenstoff-Gehalts aus.

Ein weiterer Vorteil des Laser-Schweißverfahrens ist darin zu sehen, daß die Einschweißtiefe gut kontrolliert werden kann, so daß sowohl die Schweißnaht selbst als auch die gesamte sie umgebende Wärmeeinflußzone sehr schmal gehalten werden können. Hierdurch wird beim Schweißen nur eine vergleichsweise geringe Wärmemenge in die Muttern eingetragen, so daß eine Beeinträchtigung der Wälzkörperlaufflächen sowie eine Beschädigung der in diesem Endmontagezustand bereits in die Muttern eingesetzten, aus Kunststoff gefertigten Wälzkörperumlenkstücke nicht zu befürchten ist. Wahlweise kann ferner die Qualität der Schweißnaht durch Vorwärmen oder Nachwärmen des Schweißnaht-nahen Bereichs günstig beeinflußt werden. Insbesondere durch das Nachwärmen kann ein Überschreiten der kritischen Abkühlgeschwindigkeit der Schweißnaht verhindert werden. In Hinblick auf das Material der Wälzkörper-Umlenkstücke beträgt die obere Grenze für die sich im Bereich dieser Umlenkstücke während des Vorwärmens oder/und Schweißens oder/und Nachwärmens einstellende Temperatur etwa 120°C. In von den Umlenkstücken entfernten Bereichen der Einzelmuttern können punktuell durchaus höhere Temperaturen herrschen. Nach dem Schweißen kann der Wälzkörpergewindetrieb sofort weiterverwendet werden. Etwaige Liegezeiten oder aufwendige Nachbearbeitungen sind nicht erforderlich.

Grundsätzlich istesjedoch ebenso möglich, auch andere Schweißverfahren, beispielsweise das WIG-Schweißen (Wolfram-Inertgas-Schweißen), oder Löten einzusetzen.

Unabhängig von dem jeweils eingesetzten Schweißverfahren ist zur Erzielung einer glatten äußeren Oberfläche der Doppelmutter bevorzugt, wenn die wenigstens eine Schweißstelle bzw. -naht von einer V-Schweißstelle bzw. -naht gebildet ist. Hierzu ist es weiter von Vorteil, wenn die beiden miteinander zu verschweißenden Teile in dem für das Veschweißen vorgesehenen Bereich angefast sind.

Um die zur Verbindung der beiden Einzelmuttern, gewünschtenfalls unter Vermittelung eines Zwischenelements dienenden Schweißstellen bzw. -nähte vor Korrosion und dergleichen schädlichen äußeren Einflüssen schützen zu können, wird in Weiterbildung der Erfindung vorgeschlagen, daß diese Schweißstellen bzw. -nähte mittels eines Abdeckrings überdeckt sind. Dabei kann der Abdeckring aus Kunststoff, Metall oder einem anderen geeigneten Material gefertigt und ferner auf dem Wälzkörpergewindetrieb, beispielsweise durch Kleben, befestigt sein. Im Falle des Einsatzes eines geschlitzten Abdeckrings kann dieser auch einfach auf den Wälzkörpergewindetrieb aufgeklipst und auf diesem lediglich aufgrund der Eigenelastizität des Abdeckrings gehalten sein.

Wird sowohl bei der Verbindung des Zwischenelements mit der einen Einzelmutter als auch bei der Verbindung des Zwischenelements mit der anderen Einzelmutter jeweils wenigstens ein Paßteil eingesetzt, so wird vorgeschlagen, daß alle Paßteile identisch ausgebildet sind, was Vorteile hinsichtlich der Kosten für die Herstellung und Lagerhaltung der Paßteile hat.

Die Erfindung betrifft ferner ein Verfahren zum Montieren eines erfindungsgemäßen Wälzkörpergewindetriebs, insbesondere Kugelgewindetriebs, mit den Maßnahmen des Anspruchs 34.

Die Erfindung wird im folgenden anhand der beiliegenden Zeichnung an einigen Ausführungsbeispielen näher erläutert werden. Es stellt dar:
- Fig. 1: eine perspektivische Darstellung einer ersten Ausführungsform eines erfindungsgemäßen Wälzkörpergewindetriebs;
- Fig. 2: eine Schnittdarstellung des Wälzkörpergewindetriebs gemäß Fig. 1 längs der Linie II-II in Fig. 1;
- Fig. 3 bis 7 und 9 bis 13: Ansichten ähnlich Fig. 2 weiterer Ausführungsformen teils erfindungsgemäßer Wälzkörpergewindetriebe, wobei die Ausführungsformen der Figuren 7, 9, 10 und 12 nicht durch den wortlaut des Anspruchs 1 gedeckt sind;
- Fig. 8: eine Draufsicht auf den in Fig. 7 dargestellten Wälzkörpergewindetrieb;
- Fig. 14 und 15: Draufsichten zur Erläuterung verschiedener Möglichkeiten zur Verbindung eines als geschlitztes Ringelement ausgebildeten Zwischenelements mit den beiden Einzelmuttern;
- Fig. 16: eine weitere Ansicht ähnlich Fig. 2 eines weiteren erfindungsgemäßen Wälzkörpergewindetriebes; und
- Fig. 17: eine weitere Ansicht ähnlich Fig. 1 eines weiteren Wälzkörpergewindetriebes, die nicht durch den wortlaut des Anspruchs 1 gedeckt sind.

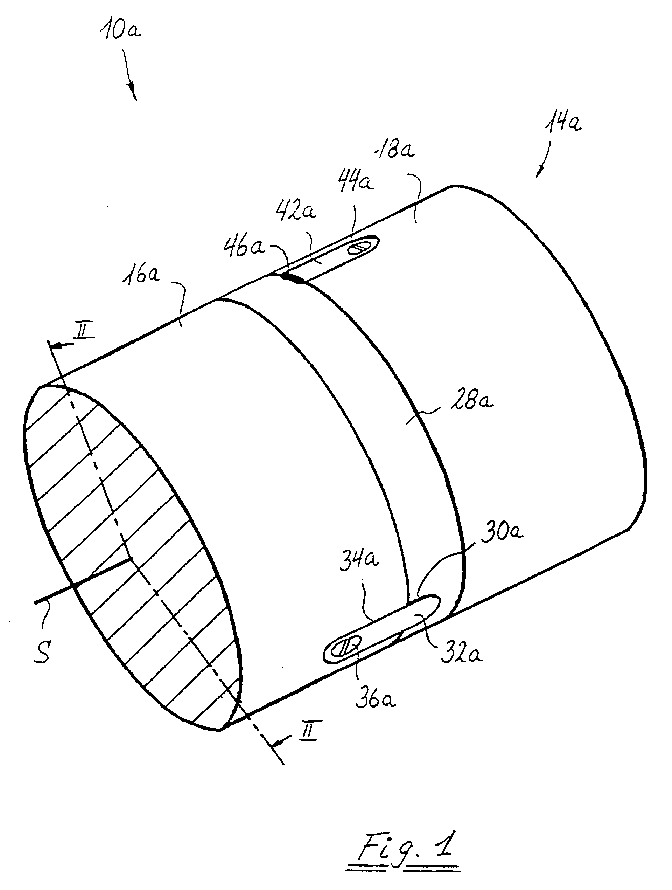

In den Fig. 1 und 2 ist ein erfindungsgemäßer Wälzkörpergewindetrieb ganz allgemein mit 10a bezeichnet. Der Wälzkörpergewindetrieb 10a umfaßt eine Gewindespindel 12a (siehe Fig. 2) mit einer Spindelachse S sowie eine konzentrisch zur Gewindespindel 12a angeordnete Doppelmutter 14a. Die Doppelmutter 14a umfaßt eine erste Einzelmutter 16a und eine zweite Einzelmutter 18a, welche auf eine nachfolgend noch näher zu erläuternde Weise miteinander drehfest verbunden sind.

Wälzkörperlaufbahnen 20a und 22a der beiden Muttern 16a und 18a bilden zusammen mit einer Wälzkörperlaufbahn 24a der Spindel 12a Wälzkörperlaufkanäle für Wälzkörper 26a. In herkömmlicher und daher in den Figuren nicht dargestellter Weise sind die den beiden Muttern 16a und 18a zugeordneten Wälzkörperlaufkanäle über im Mantel der Muttern 16a, 18a gebildete Rückführkanäle in sich geschlossen, so daß die den beiden Muttern 16a bzw. 18a zugeordneten Wälzkörper, im dargestellten Ausführungsbeispiel Kugeln, in diesen Wälzkörperlaufkanälen endlos umlaufen. Auf diese Weise wird eine Drehbewegung der Spindel 12a um die Achse S in eine Linearbewegung der geführten Doppelmutter 14a in Richtung der Achse S umgewandelt.

Insoweit entspricht der erfindungsgemäße Wälzkörpergewindetrieb 10a aus dem Stand der Technik bekannten Wälzkörpergewindetrieben.

Derartige Wälzkörpergewindetriebe werden beispielsweise zum schnellen und genauen Positionieren von Werkzeug- und Werkstückträgern sowie zum Verfahren derselben mit definierten Geschwindigkeiten eingesetzt. Um bei der Umkehr der Bewegungsrichtung der Doppelmutter 14a möglichst hohen Genauigkeitsanforderungen genügen zu können, ist es erforderlich, daß die Doppelmutter 14a auf der Spindel 12a möglichst spielfrei läuft. Hierzu werden die beiden Muttern 16a und 18a bei der Montage auf der Spindel 12a so weit aufeinander zugedreht, bis sie aneinander anliegen. Verdreht man die Muttern 16a und 18a weiter relativ zueinander, so führt dies dazu, daß die Wälzkörper 26a in den Laufbahnen 20a bzw. 22a an einander entgegengesetzten Flankenflächen dieser Laufbahnen 20a bzw. 22a anliegen. Dies hat eine Vorspannung der beiden Muttern 16a und 18a relativ zur Gewindespindel 12a zur Folge. Durch diesen Eingriff der Wälzkörper 26a an unterschiedlichen Flankenflächen der Laufbahnen 20a und 22a wird das Spiel der Doppelmutter 14a bezüglich der Spindel 12a verringert, wenn nicht gar vollständig ausgeschlossen. Damit die vorstehend geschilderte Vorspannung nicht durch eine Relativverdrehung der beiden Muttern 16a, 18a wieder aufgehoben wird, werden diese aneinander drehfest gesichert, und zwar, wie dies aus dem Stand der Technik ebenfalls an sich bekannt ist, unter Einsatz eines Zwischenelements 28a.

Die Erfindung setzt nun bei der Art der Konstruktion dieses Zwischenelements und der Art und Weise seiner drehfesten Verbindung mit den beiden Einzelmuttern ein.

Bei der Ausführungform gemäß den Fig. 1 und 2 ist das Zwischenelement als Zwischenring 28a ausgebildet. Dieser Zwischenring 28a weist auf der der Mutter 16a zugewandten Seite eine Ausnehmung 30a auf, in welche ein Paßstück 32a formschlüssig eingreift. Das Paßstück 32a wiederum ist in einer Vertiefung 34a der Mutter 16a formschlüssig aufgenommen und mittels eines Schraubbolzens 36a an dieser gesichert. In analoger Weise ist in einer Vertiefung 40a der zweiten Mutter 18a ein Paßstück 42a formschlüssig aufgenommen und in dieser Ausnehmung 40a mittels eines Schraubbolzens 44a gesichert. Im Unterschied zum Paßstück 32a schließt das weitere Paßstück 42a bündig mit der dem Zwischenring 28a zugewandten Stirnfläche der Mutter 18a ab.

Werden nun bei der Montage des Wälzkörpergewindetriebs 10a die beiden Muttern 16a und 18a aufeinander zugedreht, bis sie unter Vermittlung des Zwischenrings 28a aneinander anliegen, so tritt hierbei auch das Paßstück 42a in Anlage an den Zwischenring 28a. Ist durch weitere Relativverdrehung der beiden Muttern 16a und 18a das gewünschte Spiel bzw. die gewünschte Vorspannung der beiden Muttern 16a, 18a bezüglich der Spindel 12a erreicht, so werden das Paßstück 42a und der Zwischenring 28a längs ihrer Kontaktlinie 46a miteinander verschweißt und so die der gewünschten Vorspannung bzw. dem gewünschten Spiel entsprechende Relativdrehstellung der beiden Muttern 16a und 18a gesichert.

Zur Herstellung der Schweißnaht 46a ist es bevorzugt, daß sowohl der Zwischenring 28a als auch das Paßstück 42a aus einem schweißbaren Material gefertigt sind, beispielsweise Stahl mit niedrigem Kohlenstoff-Gehalt. Als Grenze für die Schweißbarkeit von Stahl ohne Vor- und Nachbehandlung wird in der Fachliteratur üblicherweise ein Kohlenstoff-Gehalt von 0,22 % angegeben. Die beiden Muttern 16a und 18a können bei der Ausführungsform gemäß Fig. 1 und 2 hingegen aus hartem Stahl gefertigt sein, d.h. einem Stahl mit hohem Kohlenstoff-Gehalt.

Die in den Fig. 1 und 2 dargestellte Ausführungsform kann auf der Gewindespindel 12a zerstörungsfrei demontiert und nach Wartung bzw. Reparatur wieder montiert werden. Hierzu ist es lediglich erforderlich, die Schraube 36a zu lösen und anschließend das Paßstück 32a aus der Vertiefung 34a herauszunehmen. Hierdurch wird der formschlüssige Eingriff zwischen Paßstück 32a und Zwischenring 28a aufgehoben, so daß die Mutter 16a durch Verdrehen um die Spindelachse S von der aus Zwischenring 28a und zweiter Mutter 18a gebildeten Einheit entfernt werden kann. Zur erneuten Montage des Wälzkörpergewindetriebs 10a werden die vorstehend beschriebenen Schritte entsprechend in umgekehrter Reihenfolge durchlaufen. Zur Erleichterung der Demontage des Paßstücks 32a ist das Durchgangsloch 48a des Paßstücks 32a mit einem Innengewinde versehen, das größer ist als das Außengewinde des Schraubbolzens 36a. Nach Herausdrehen der Schraube 36a kann in dieses Gewinde 48a eine Schraube größeren Durchmessers eingedreht werden, welche sich dann an der Mutter 16a abstützt und das Paßstück 32a aus der Ausnehmung 34a heraushebelt.

Nachzutragen ist noch, daß der Zwischenring 28a sowohl auf einem Zentrieransatz 50a der Mutter 16a als auch auf einem Zentrieransatz 51a der Mutter 18a konzentrisch zur Spindelachse S gehalten ist, und zwar in lockerem Zentriersitz, d.h. einem Sitz, der eine Relativverdrehung der Muttern 16a, 18a und des Zwischenrings 28a in einfacher Weise zuläßt. Dies ist schematisch in dem Detail A in Fig. 2 dargestellt.

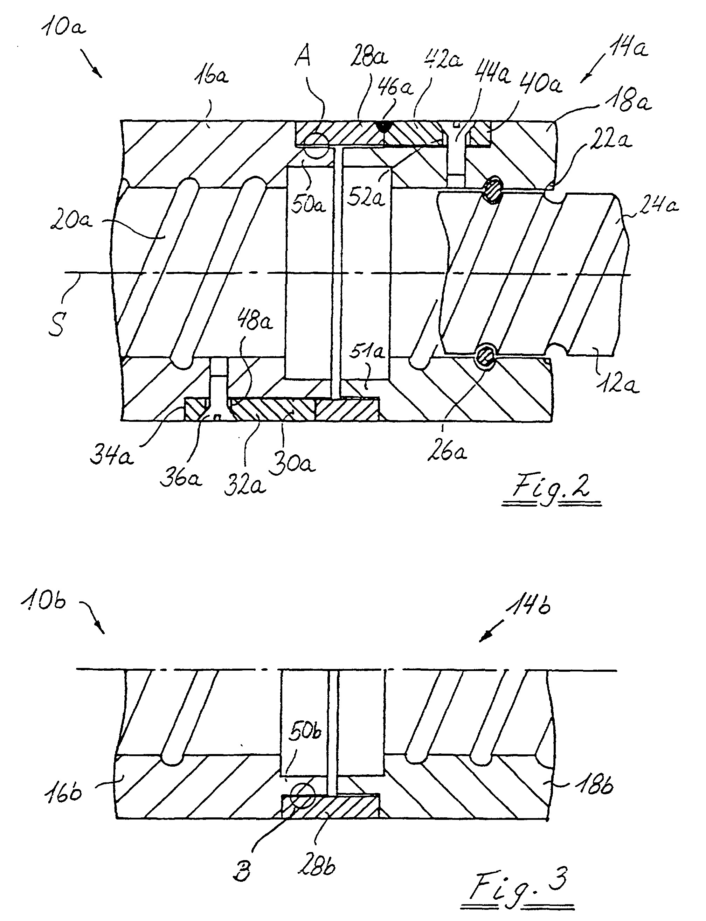

In Fig. 3 ist eine weitere Ausführungsform eines erfindungsgemäßen Wälzkörpergewindetriebs dargestellt, welche sich von der Ausführungsform gemäß Fig. 1 und 2 lediglich durch die Art und Weise der drehfesten Fixierung des Zwischenrings an der ersten Mutter unterscheidet. Daher sind in Fig. 3 analoge Teile mit gleichen Bezugszeichen versehen wie in den Fig. 1 und 2, jedoch mit dem Suffix "b" anstelle des Suffix "a". Darüber hinaus wird die Ausführungsform gemäß Fig. 3 im folgenden nur insoweit beschrieben werden, als sie sich von der Ausführungsform gemäß Fig. 1 und 2 unterscheidet, auf deren Diskussion ansonsten hiermit ausdrücklich verwiesen sei.

Bei dem Wälzkörpergewindetrieb 10b gemäß Fig. 3 ist der Zwischenring 28b auf dem Zentrieransatz 50b der ersten Mutter 16b durch Preßpassung drehfest gesichert, wie dies im Detail B in Fig. 3 schematisch dargestellt ist. Eine derartige Preßpassung kann beispielsweise durch Abkühlen der Mutter 16b und Erwärmen des Zwischenrings 28b, Aufstecken des thermisch erweiterten Zwischenrings 28b auf den Zentrieransatz 50b der thermisch kontrahierten Mutter 16b und anschließendes Angleichen der Temperatur der beiden Teile hergestellt werden, also durch thermisches "Aufschrumpfen" des Zwischenrings 28b auf die Mutter 16b, realisiert werden.

Die Befestigung der zweiten Mutter 18b am Zwischenring 28b kann in der gleichen Art und Weise erfolgen, wie dies vorstehend für die Ausführungsform gemäß Fig. 1 und 2 beschrieben worden ist. Daher ist in Fig. 3 auch lediglich die untere Hälfte des Wälzkörpergewindetriebs 10b dargestellt.

Die Ausführungsform gemäß Fig. 3 kann auf der Gewindespindel nicht zerstörungsfrei demontiert werden, da die erste Mutter 16b aufgrund der Preßpassung nicht relativ zu dem an der zweiten Mutter 18b befestigten Zwischenring 28b verdreht werden kann. Um den Wälzkörpergewindetrieb 10b auf der Spindel demontieren zu können, muß das dem Paßstück 42a entsprechende Paßstück aus der zugehörigen Ausnehmung der zweiten Mutter 18b unter Zerstörung der Schweißnaht mit dem Zwischenring 28b herausgehebelt werden. Zur Erleichterung dieses Heraushebelns verfügt, wie dies für die Ausführungsform gemäß Fig. 2 dargestellt ist, auch das Durchgangsloch des Paßstücks 42a über ein Innengewinde 52a, welches in der gleichen Art und Weise ausgebildet ist und eingesetzt werden kann, wie dies für das Innengewinde 48a des Paßstücks 32a beschrieben worden ist. Nach Zerstörung der Schweißnaht kann die aus erster Mutter 16b und Zwischenring 28b gebildete Einheit von der zweiten Mutter 18b durch Relativverdrehen entfernt werden.

Alternativ ist es jedoch auch möglich, die Doppelmutter 14b von der Gewindespindel auf eine glatte Hilfsspindel geringeren Durchmessers aufzudrehen und dann nach Lösen des dem Schraubbolzen 44a entsprechenden Schraubbolzens die zweite Mutter 18b in axialer Richtung von der aus der ersten Mutter 16b und dem Zwischenring 28b gebildeten Einheit zu entfernen. Hierbei wird die Schweißnaht nicht zerstört und die Doppelmutter 14b kann nach erneuter Montage auf der glatten Hilfsspindel wieder auf die Gewindespindel übernommen werden.

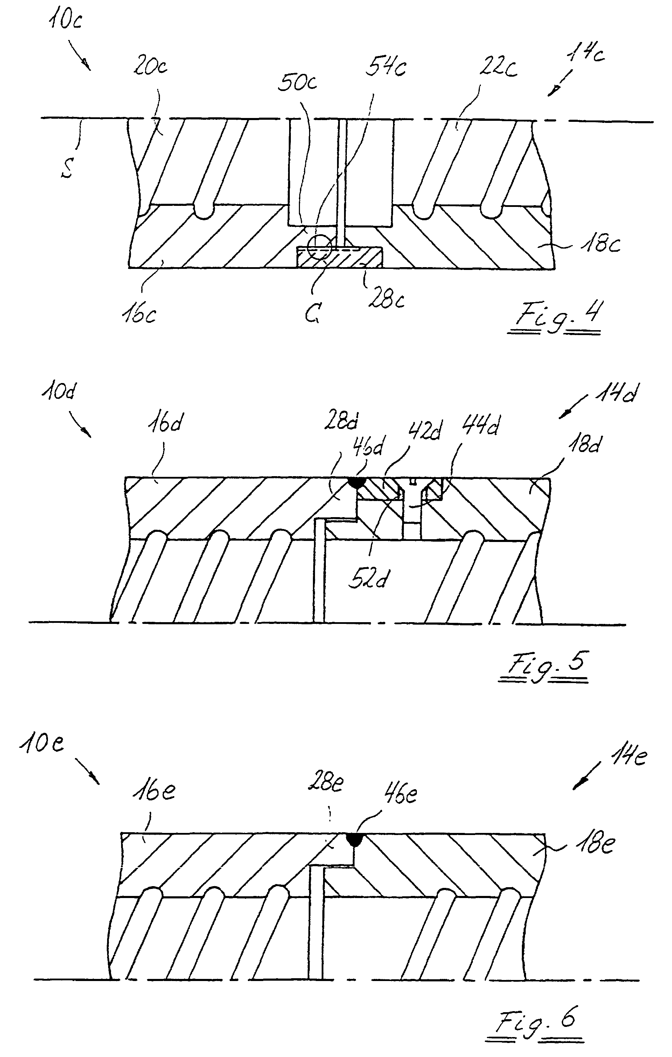

Eine weitere Möglichkeit, das Zwischenelement mit der ersten Mutter zu verbinden, ist in Fig. 4 dargestellt. Die Ausführungsform gemäß Fig. 4 entspricht im wesentlichen den Ausführungsformen gemäß Fig. 1 - 3. Daher sind analoge Teile mit gleichen Bezugszeichen versehen wie in den vorstehenden Figuren, jedoch mit dem Suffix "c". Des weiteren wird die Ausführungsform gemäß Fig. 4 im folgenden nur insoweit beschrieben, als sie sich von jenen der vorstehenden Figuren unterscheidet, auf deren Diskussion hiermit ausdrücklich verwiesen sei.

Wie insbesondere im Detail C dargestellt ist, ist der Zwischenring 28c mittels eines Feingewindes 54c auf den Ansatz 50c der ersten Mutter 16c aufgeschraubt. Das Feingewinde 54c unterscheidet sich in Steigung oder/und Schraubsinn von den Wälzkörperlaufbahnen 20c bzw. 22c der Muttern 16c und 18c. Hierdurch kann sich die Verbindung zwischen dem Zwischenring 28c und der ersten Mutter 16c im Betrieb nicht lösen. Hinsichtlich der Montage und Demontage der Doppelmutter 14c des in Fig. 4 dargestellten Wälzkörpergewindetriebs 10c sei auf die Ausführungsform gemäß Fig. 3 verwiesen.

Aufgrund der Gewinden inhärenten Eigenschaften kann der Ansatz 50c der ersten Mutter 16c in der Ausführungsform gemäß Fig. 4 nicht als Zentrieransatz für den Zwischenring 28c dienen. Um dennoch eine Zentrierwirkung zu erhalten, könnte an dem Ansatz 50c beispielsweise zusätzlich zu dem in Fig. 4 dargestellten Gewindeabschnitt ein weiterer bezüglich des Gewindeabschnitts in radialer Richtung zur Spindelachse S rückspringender Zentrierabschnitt vorgesehen sein.

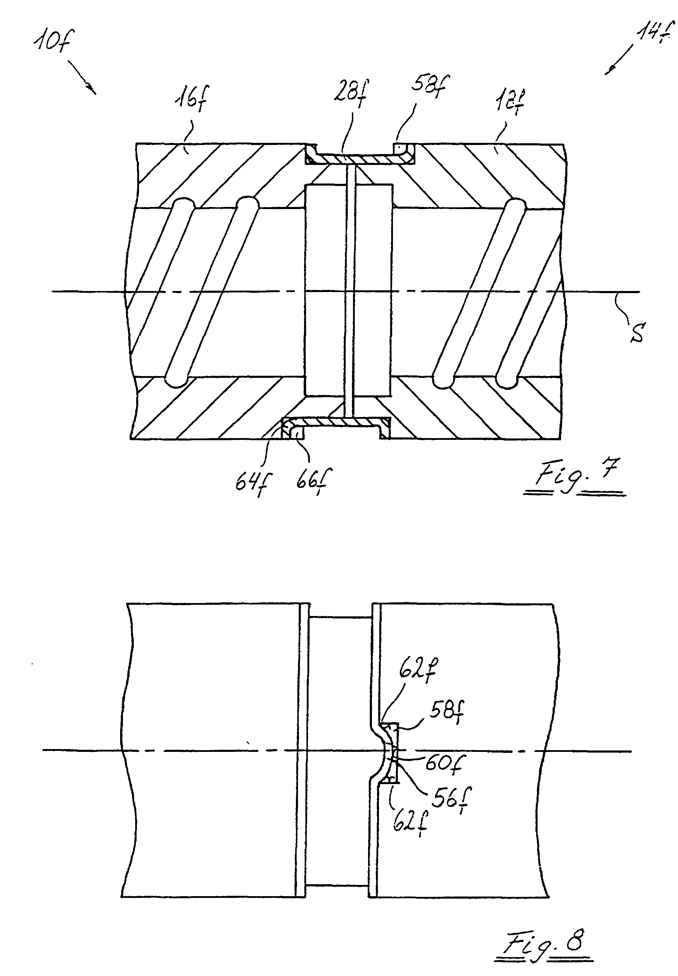

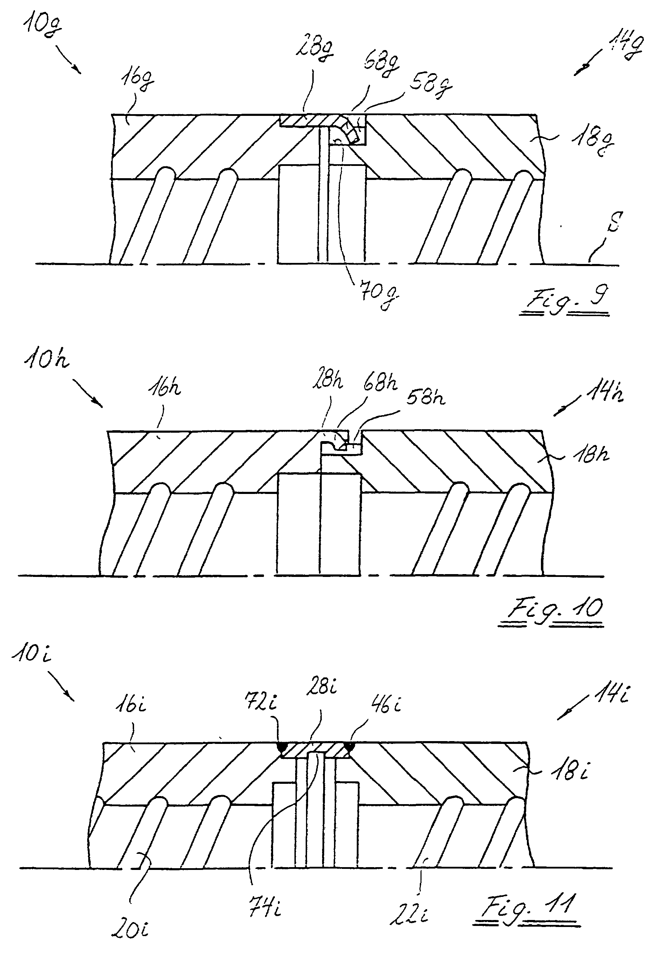

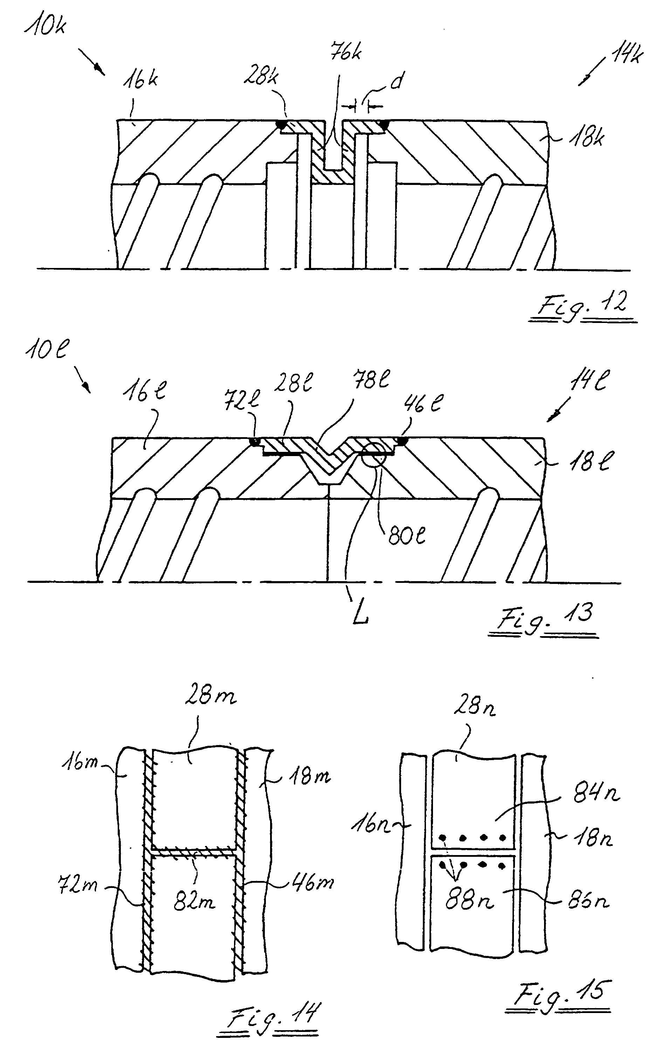

In Fig. 5 ist eine weitere Ausführungsform eines erfindungsgemäßen Wälzkörpergewindetriebs dargestellt, die im wesentlichen den vorstehend beschriebenen Ausführungsformen entspricht. Daher sind in Fig. 5 analoge Teile mit gleichen Bezugszeichen versehen wie in den vorstehenden Figuren, jedoch mit dem Suffix "d". Des weiteren wird die Ausführungsform gemäß Fig. 5 im folgenden nur insoweit beschrieben werden, als sie sich von den vorstehenden Ausführungsformen unterscheidet, auf deren Diskussion hiermit ansonsten ausdrücklich verwiesen sei.

Bei dem Wälzkörpergewindetrieb 10d gemäß Fig. 5 ist der Zwischenring 28d einstückig an der ersten Mutter 16d angeformt, wodurch sich die zur Herstellung des Wälzkörpergewindetriebs 10d erforderliche Teilzahl verringert. Hinsichtlich der Verbindung der zweiten Mutter 18d mit der ersten Mutter 16d bzw. deren Zwischenringabschnitt 28d kann auf die Beschreibung der Ausführungsform gemäß Fig. 2 verwiesen werden. Wie bei dieser ist ein mittels eines Schraubbolzens 44d an der Mutter 18d gehaltenes Paßstück 42d über eine Schweißnaht 46d mit dem Zwischenringabschnitt 28d der ersten Mutter 16d verbunden. Wie bei der Ausführungsform gemäß Fig. 2 können beide Muttern 16d und 18d aus hartem Stahl gefertigt sein, d.h. aus Stahl mit hohem Kohlenstoff-Gehalt, wenn nur das Paßstück 42d aus einem schweißbaren Material, insbesondere einem Stahl mit niedrigem Kohlenstoff-Gehalt gefertigt ist. Es ist jedoch ebenso möglich, daß die erste Mutter 16d eine einsatzgehärtete Mutter ist.

Die Doppelmutter 14d des Wälzkörpergewindetriebs 10d kann sowohl auf der Gewindespindel als auch auf einer glatten Hilfsspindel lediglich unter Zerstörung der Schweißnaht 46d demontiert werden. Auf die diesbezügliche Diskussion der Ausführungsform gemäß Fig. 2, nicht zuletzt was die Ausbildung des Durchgangslochs 52d des Paßstücks 42d anbelangt, sei verwiesen.

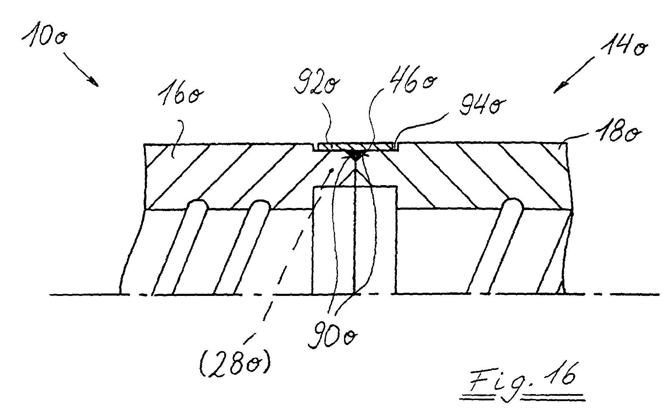

In Fig. 6 ist eine weitere Ausführungsform eines erfindungsgemäßen Wälzkörpergewindetriebs dargestellt, die im wesentlichen den vorstehend beschriebenen Ausführungsformen entspricht. Daher sind in Fig. 6 analoge Teile mit gleichen Bezugszeichen versehen wie in den vorstehenden Figuren, jedoch mit dem Suffix "e". Des weiteren wird die Ausführungsform gemäß Fig. 6 im folgenden nur insoweit beschrieben werden, als sie sich von den vorstehenden Ausführungsformen unterscheidet, auf deren Diskussion hiermit ansonsten ausdrücklich verwiesen sei.

Die Doppelmutter 14e des Wälzkörpergewindetriebs 10e gemäß Fig. 6 hat insbesondere gegenüber der Ausführungsform gemäß Fig. 5 den Vorteil, daß zu ihrer Montage ein Minimum an Teilen erforderlich ist, nämlich nur noch die beiden Muttern 16e und 18e. Wie bei der Ausführungsform gemäß Fig. 5 verfügt die erste Mutter 16e über einen einstückig angeformten Zwischenringabschnitt 28e. Dieser ist mittels einer Schweißnaht 46e mit der zweiten Mutter 18e verbunden. Hierzu ist es erforderlich, daß zumindest eine der beiden Muttern 16e und 18e eine einsatzgehärtete Mutter ist. Die Doppelmutter 14e des Wälzkörpergewindetriebs 10e gemäß Fig. 6 kann lediglich durch aufwendiges Entfernen der Schweißnaht 46e demontiert werden. Sie eignet sich jedoch aufgrund ihrer kostengünstigen Herstellung und Montage insbesondere für Einsatzzwecke mit geringem Beschädigungsrisiko.

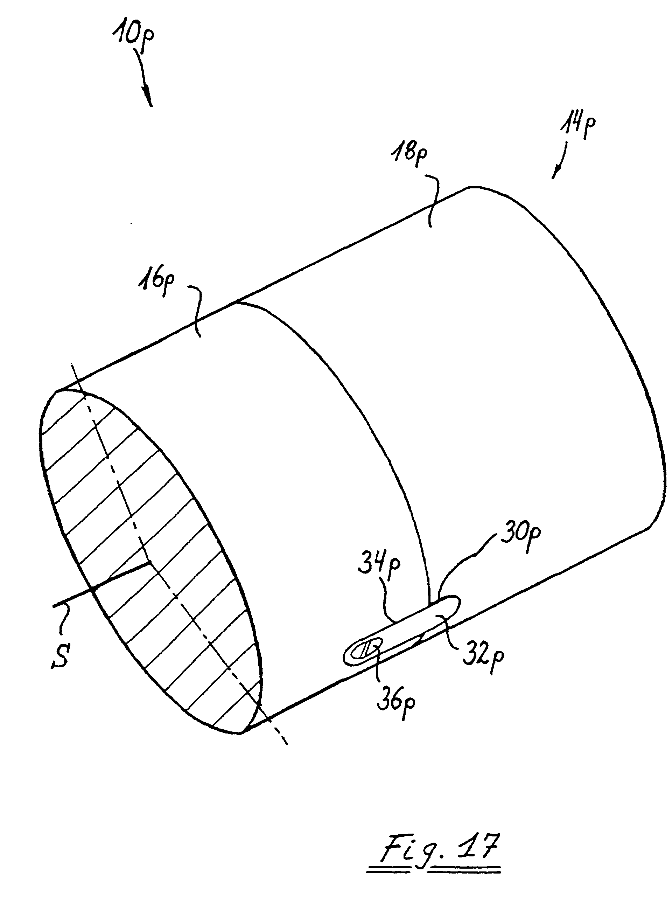

In den Fig. 7 und 8 ist eine weitere Ausführungsform eines nicht unter den wortlaut des Anspruchs 1 fallenden Wälzkörpergewindetriebs dargestellt, die im wesentlichen den vorstehend beschriebenen Ausführungsformen entspricht. Daher sind in den Fig. 7 und 8 analoge Teile mit gleichen Bezugszeichen versehen wie in den vorstehenden Figuren, jedoch mit dem Suffix "f". Des weiteren wird die Ausführungsform gemäß Fig. 7 und 8 im folgenden nur insoweit beschrieben werden, als sie sich von den vorstehenden Ausführungsformen unterscheidet, auf deren Diskussion hiermit ansonsten ausdrücklich verwiesen sei.

Die Doppelmutter 14f des Wälzkörpergewindetriebs 10f gemäß Fig. 7 unterscheidet sich von den vorstehenden Ausführungsformen hauptsächlich dadurch, daß der mit der ersten Mutter 16f verbundene Zwischenring 28f nach Einstellen des gewünschten Spiels bzw. der gewünschten Vorspannung mit der zweiten Mutter 18f oder einem mit dieser verbundenen Teil nicht durch Schweißen verbunden wird, sondern durch Eindrücken bzw. Einstemmen eines Umfangsabschnitts 56f (siehe Fig. 8) des Zwischenrings 28f in eine Ausnehmung 58f der zweiten Mutter 18f. Dieses Eindrücken des Umfangsabschnitts 56f des Zwischenrings 58f kann unter Zuhilfenahme entsprechender Abstützmittel und eines Stempels erfolgen.

Um zu vermeiden, daß durch diese Art der drehfesten Verbindung von Zwischenring 28f und zweiter Mutter 18f die Vorspannkraft der beiden Muttern 16f und 18f bezüglich der Gewindespindel beeinflußt wird, ist es bevorzugt, wenn sich der Umfangsabschnitt 56f nicht an der axialen Begrenzungsfläche 60f der Ausnehmung 58f abstützt, sondern lediglich an deren Umfangsbegrenzungsflächen 62f (siehe Fig. 8). Bei Bedarf kann der eingestemmte bzw. eingedrückte Umfangsabschnitt 56f auch an den Umfangsbegrenzungsflächen 62f entsprechenden Stellen eingeschnitten sein, was jedoch weder in Fig. 7 noch in Fig. 8 dargestellt ist.

Bei der Ausführungsform gemäß Fig. 7 ist der Zwischenring 28f zusätzlich auch mit der ersten Mutter 16f durch Einstemmen eines Umfangsabschnitts 64f in eine Ausnehmung 66f der ersten Mutter 16f formschlüssig verbunden. Grundsätzlich ist es jedoch auch denkbar, zur Verbindung des Zwischenrings 28f mit der ersten Mutter 16f auf eine andere Verbindungsart zurückzugreifen, beispielsweise auf eine der mit Bezug auf die Fig. 2 bis 4 beschriebenen Verbindungsarten.

In Fig. 9 ist eine weitere Ausführungsform eines nicht unter den wortlaut des Anspruchs fallenden Wälzkörpergewindetriebs dargestellt, die im wesentlichen den vorstehend beschriebenen Ausführungsformen entspricht. Daher sind in Fig. 9 analoge Teile mit gleichen Bezugszeichen versehen wie in den vorstehenden Figuren, jedoch mit dem Suffix "g". Des weiteren wird die Ausführungsform gemäß Fig. 9 im folgenden nur insoweit beschrieben werden, als sie sich von den vorstehenden Ausführungsformen unterscheidet, auf deren Diskussion hiermit ansonsten ausdrücklich verwiesen sei.

Die Doppelmutter 14g des Wälzkörpergewindetriebs 10g gemäß Fig. 9 unterscheidet sich von der in den Fig. 7 und 8 dargestellten Ausführungsform lediglich dadurch, daß der Umfangsabschnitt 68g des Zwischenrings 28g zur Verbindung mit der Ausnehmung 58g der zweiten Mutter 18g nicht in axialer Richtung, d.h. in Richtung der Spindelachse S in diese Ausnehmung eingedrückt ist, sondern in radialer Richtung, d.h. auf die Spindelachse S zu. Um einen Einfluß auf die Zentrierung der beiden Muttern 16g und 18g bezüglich der Spindelachse S infolge dieser Verbindung vermeiden zu können, sollte der eingedrückte Umfangsabschnitt 68g sich nicht an der radialen Begrenzungsfläche 70g der Ausnehmung 58g abstützen, sondern lediglich an deren Umfangsbegrenzungsflächen. Ein Einfluß auf die Zentrierung kann zuverlässig ausgeschlossen werden, wenn die beiden Muttern 1 6g und 18g mit einem Zentrieransatz und einer Zentrierausnehmung ineinandergreifen, was in Fig. 9 jedoch nicht dargestellt ist.

In Fig. 10 ist eine weitere Ausführungsform eines nicht unter den wortlaut des Anspruchs 1 fallenden Wälzkörpergewindetriebs dargestellt, die im wesentlichen den vorstehend beschriebenen Ausführungsformen entspricht. Daher sind in Fig. 10 analoge Teile mit gleichen Bezugszeichen versehen wie in den vorstehenden Figuren, jedoch mit dem Suffix "h". Des weiteren wird die Ausführungsform gemäß Fig. 10 im folgenden nur insoweit beschrieben werden, als sie sich von den vorstehenden Ausführungsformen unterscheidet, auf deren Diskussion hiermit ansonsten ausdrücklich verwiesen sei.

Bei der Doppelmutter 14h des Wälzkörpergewindetriebs 10h gemäß Fig. 10 ist an der ersten Mutter 16h ein Zwischenringabschnitt 28h einstückig angeformt. Durch Eindrücken eines Umfangsabschnitts 68h in eine Ausnehmung 58h der zweiten Mutter 18h in einer der Ausführungsform gemäß Fig. 9 entsprechenden Weise sind die beiden Muttern 16h und 18h drehfest miteinander verbunden. Die Mutter 16h ist in diesem Fall vorzugsweise eine einsatzgehärtete Mutter, die insbesondere im Bereich des Zwischenringabschnitts 28h aus einem Stahl mit niedrigem Kohlenstoff-Gehalt, also einem weichen und relativ leicht verformbaren Stahl, gebildet ist.

Zu den Ausführungsformen gemäß Fig. 7 bis 10 ist noch nachzutragen, daß sich die Ausnehmungen, in welche die Umfangsabschnitte des Zwischenrings in axialer oder radialer Richtung eingedrückt sind, vorteilhafterweise nicht bis zur Innenumfangsfläche der Muttern fortsetzen, so daß eine Schwächung des Endbereichs der Muttern vermieden und somit deren ausreichende Steifheit sichergestellt ist.

In Fig. 11 ist eine weitere Ausführungsform eines erfindungsgemäßen Wälzkörpergewindetriebs dargestellt, die im wesentlichen den vorstehend beschriebenen Ausführungsformen entspricht. Daher sind in Fig. 11 analoge Teile mit gleichen Bezugszeichen versehen wie in den vorstehenden Figuren, jedoch mit dem Suffix "i". Des weiteren wird die Ausführungsform gemäß Fig. 11 im folgenden nur insoweit beschrieben werden, als sie sich von den vorstehenden Ausführungsformen unterscheidet, auf deren Diskussion hiermit ansonsten ausdrücklich verwiesen sei.

Bei der Doppelmutter 14i des Wälzkörpergewindetriebs 10i gemäß Fig. 11 sind die beiden Muttern 16i und 18i über einen Zwischenring 28i aneinander verdrehgesichert, der sowohl mit der zweiten Mutter 18i über eine Schweißnaht 46i als auch mit der Mutter 16i über eine Schweißnaht 72i verbunden ist. Ist der Zwischenring 28i aus einem Stahl mit niedrigem Kohlenstoff-Gehalt gefertigt, so können beide Muttern 16i und 18i aus einem harten Stahl, d.h. einem Stahl mit hohem Kohlenstoff-Anteil gefertigt sein.

Zur Herstellung der beiden Schweißnähte 46i und 72i kann beispielsweise eine Laser-Schweißanlage eingesetzt werden. Bei einer derartigen Laser-Schweißanlage kann der Laserstrahl unter Einsatz einfacher optischer Mittel geteilt werden, so daß die beiden zueinander parallel verlaufenden Nähte 46i und 72i gleichzeitig hergestellt werden können. Hierdurch verkürzt sich die Fertigungsdauer, was sich günstig auf die Herstellungskosten auswirkt.

Ferner ist darauf hinzuweisen, daß der Zwischenring 28i in seinem mittleren Bereich durch eine Nut 74i geschwächt ist. Hierdurch wird der Zwischenring 28i geringfügig flexibilisiert, so daß die Doppelmutter 14i eventuell vorhandenen Steigungs- oder Parallelitäts-Ungenauigkeiten der Laufbahnen 20i und 22i der Muttern 16i und 18i durch entsprechende Ausgleichsbewegungen nachgeben kann. Diese Flexibiliesierung ist insbesondere für "Low cost"-Ausführungsformen interessant, welche mit relaitv großzügig bemessenen Fertigungstoleranzen hergestellt werden. Bei den vorstehend beschriebenen Ausführungsformen, bei denen bei der Verbindung zwischen erster Mutter und Zwischenring oder/und der Verbindung von Zwischenring und zweiter Mutter wenigstens ein Paßstück zum Einsatz kommt, ist eine derartige Flexibilisierung nicht erforderlich, da "Paßstück-Verbindungen" ohnehin ausreichend flexibel sind.

In Fig. 12 ist eine weitere Ausführungsform eines nicht unter den Wortlaut des Anspruchs 1 fallenden Wälzkörpergewindetriebs dargestellt, die im wesentlichen den vorstehend beschriebenen Ausführungsformen entspricht. Daher sind in Fig. 12 analoge Teile mit gleichen Bezugszeichen versehen wie in den vorstehenden Figuren, jedoch mit dem Suffix "k". Des weiteren wird die Ausführungsform gemäß Fig. 12 im folgenden nur insoweit beschrieben werden, als sie sich von den vorstehenden Ausführungsformen unterscheidet, auf deren Diskussion hiermit ansonsten ausdrücklich verwiesen sei.

Die Doppelmutter 14k des Wälzkörpergewindetriebs 10k gemäß Fig. 12 unterscheidet sich von der Ausführungsform gemäß Fig. 11 lediglich dadurch, daß der Zwischenring 28k nicht durch eine Materialschwächung flexibilisiert ist, sondern durch entsprechende Formgebung. In der Ausführungsform gemäß Fig. 12 weist der Zwischenring 28k einen "Hut"förmigen Querschnitt auf. Für die Flexibilisierung der Doppelmutter 14k ist ferner von Bedeutung, daß die beiden in radialer Richtung verlaufenden Flanken 76k des Zwischenrings 28k von den ihnen zugewandten Stirnflächen der beiden Muttern 16k, 18k einen gewissen Abstand d aufweisen. Ansonsten entspricht die Ausführungsform gemäß Fig. 12 jener gemäß Fig. 11, insbesondere was die Verschweißung des Zwischenrings 28k mit den Muttern 16k und 18k anbelangt.

In Fig. 13 ist eine weitere Ausführungsform eines erfindungsgemäßen Wälzkörpergewindetriebs dargestellt, die im wesentlichen den vorstehend beschriebenen Ausführungsformen entspricht. Daher sind in Fig. 13 analoge Teile mit gleichen Bezugszeichen versehen wie in den vorstehenden Figuren, jedoch mit dem Suffix "l". Des weiteren wird die Ausführungsform gemäß Fig. 13 im folgenden nur insoweit beschrieben werden, als sie sich von den vorstehenden Ausführungsformen unterscheidet, auf deren Diskussion hiermit ansonsten ausdrücklich verwiesen sei.

Bei der Ausführungsform gemäß Fig. 13 ist der Zwischenring 28l durch einen V-förmigen Abschnitt 78l flexibilisiert und mit den beiden Einzelmuttern 16l und 18l der Doppelmutter 14l des Wälzkörpergewindetriebs 10l durch Schweißnähte 46l und 72l verbunden. Im Unterschied zu den Ausführungsformen gemäß Fig. 11 und 12 liegen bei der Ausführungsform gemäß Fig. 13 die beiden Muttern 16l und 18l mit ihren Stirnflächen aneinander an und stützen sich somit aneinander und nicht am Zwischenring 28l ab.

Obgleich bei den vorstehenden Ausführungsformen stets davon ausgegangen worden ist, daß der Zwischenring von einem ungeschlitzten kreiszylindrischen Element gebildet ist, d.h. einem Element mit durchgehender Mantellinie, ist es erfindungsgemäß auch denkbar, das Zwischenelement aus einem Blechstreifen zu fertigen, der um die Kontaktstelle der beiden Muttern herumgelegt wird. Bei derartigen Ausführungsformen mit "geschlitztem Ring" kann die drehfeste Verbindung des Zwischenelements mit den beiden Muttern beispielsweise durch ein doppelseitiges Klebeband sichergestellt werden, wie dies beispielseweise bei der Ausführungsform gemäß Fig. 13 im Detail L dargestellt ist. Das Klebeband 80l kann beispielsweise ein doppelseitiges Klebeband mit aushärtenden Harzen sein.

Um die Klebestellen vor äußeren Einflüssen schützen zu können, können sämtliche Fugen zwischen einem geschlitzten Zwischenring 28m und den beiden Muttern 16m und 18m mittels Schweißnähten 46m, 72m und 82m verschlossen sein. Die Fugen weisen bevorzugt eine Breite auf, die höchstens das 0,2-fache der Materialstärke des Blechbandes 28m beträgt.

Die Schweißnähte 46m, 72m und 82m können wie vorstehend beschrieben durch Laser-Scheißen, WIG-Schweißen oder dergleichen Schweißverfahren gefertigt sein. So können sie beispielsweise auch als Rollschweißnähte ausgeführt sein. Auch ist der Einsatz anderer Preßschweißverfahren denkbar.

Sind schädliche äußere Einflüsse nicht zu befürchten, so kann der geschlitzte Ring 28n auch lediglich an seinen einander gegenüberliegenden Enden 84n und 86n mit den Muttern 16n und 18n durch Punktschweißstellen 88n gesichert sein, welche die Klebeschicht bzw. das Klebeband durchdringen.

In Fig. 16 ist eine weitere Ausführungsform eines erfindungsgemäßen Wälzkörpergewindetriebs dargestellt, die im wesentlichen den vorstehend beschriebenen Ausführungsformen entspricht. Daher sind in Fig. 16 analoge Teile mit gleichen Bezugszeichen versehen wie in den vorstehenden Figuren, jedoch mit dem Suffix "o". Des weiteren wird die Ausführungsform gemäß Fig. 16 im folgenden nur insoweit beschrieben werden, als sie sich von den vorstehenden Ausführungsformen unterscheidet, auf deren Diskussion hiermit ansonsten ausdrücklich verwiesen sei.

Ähnlich wie bei der Ausführungsform gemäß Fig. 6 ist auch zur Fertigung der Doppelmutter 14o des Wälzkörpergewinde 10o eine geringe Anzahl von Teilen erforderlich, da die beiden Einzelmuttern 16o und 18o unmittelbar miteinander verschweißt sind. Hierzu ist es gemäß vorstehendem erforderlich, daß zumindest eine 16o oder 18o der beiden Einzelmuttern in einem an die Schweißnaht 46o angrenzenden Bereich aus einem kohlenstoff-armen Stahl gefertigt ist. Bevorzugt ist die Schweißnaht 46o als V-Schweißnaht ausgebildet, da sich hierdurch eine glatte äußere Oberfläche der Doppelmutter 14o erzielen läßt. Zur Erleichterung der Bildung der V-Schweißnaht sind die unverschweißten Einzelmuttern 16o und 18o an ihren zum Verschweißen bestimmten Kanten jeweils mit einer Fase 90o ausgebildet.

Um die Schweißnaht 46o vor Korrosion oder sonstigen schädlichen äußeren Einflüssen zu schützen, ist die Schweißnaht 46o mittels eines Rings 92o abgedeckt. Um der gesamten Doppelmutter 14o eine im wesentlichen durchgehende glatte Oberfläche zu verleihen, ist der Ring 92o in eine Ringausnehmung 94o eingelegt, die von den beiden Einzelmuttern 16o und 18o gemeinsam gebildet ist. Der Abdeckring 92o kann aus Metall, Kunststoff oder einem anderen geeigneten Material gebildet sein. Um ihn in einfacher Weise in die Ausnehmung 94o einlegen zu können, ist er bevorzugt als geschlitzter Ring gefertigt. Der Ring 92o kann in der Ausnehmung 94o durch Kleben oder dergleichen befestigt sein. Er kann in der Ausnehmung 94o aber auch nur durch seine Eigenelastizität gehalten sein.

An dieser Stelle sei mit Bezug auf die Ausführungsformen gemäß Fig. 6 und 16 nochmals darauf hingewiesen, daß es häufig schwierig ist, zu unterscheiden, ob die beiden Einzelmuttern unmittelbar oder über ein an einer der beiden Einzelmuttern einstückig angeformtes Zwsichenelement miteinander verbunden sind. So kann bei der Ausführungsform gemäß Fig. 6 mit einigem Recht der Bereich 28e als Teil der Einzelmutter 16e angesehen werden, so daß man auch von einer unmittelbaren Verbindung der beiden Einzelmuttern 16e und 18e sprechen könnte. Im Gegenzug könnte man bei der Ausführungsform gemäß Fig. 16 an einer der beiden Einzelmuttern einen Bereich 28o definieren, der die Funktion des Zwischenelements übernimmt.

In Fig. 17 ist eine weitere Ausführungsform eines nicht unter den wortlaut des Auspruchs 1 fallenden Wälzkörpergewindetriebs dargestellt, die im wesentlichen den vorstehend beschriebenen Ausführungsformen entspricht. Daher sind in Fig. 17 analoge Teile mit gleichen Bezugszeichen versehen wie in den vorstehenden Figuren, jedoch mit dem Suffix "p". Des weiteren wird die Ausführungsform gemäß Fig. 17 im folgenden nur insoweit beschrieben werden, als sie sich von den vorstehenden Ausführungsformen unterscheidet, auf deren Diskussion hiermit ansonsten ausdrücklich verwiesen sei.

Bei der Ausführungsform gemäß Fig. 17 werden die beiden Einzelmuttern 16p und 18p zur Bildung der Doppelmutter 14p des Wälzkörpergewindetriebs 10p zunächst auf der Gewindespindel (Achse S) gegeneinander verschraubt, bis das gewünschte Spiel bzw. die gewünschte Vorspannung erzielt ist. Während sie weiter in diesem Zustand gehalten werden, wird im Bereich der Kontaktebene der beiden Einzelmuttern 16p und 18p eine gemeinsame Ausnehmung 30p/34p eingefräst. D.h. eine erste in die Umfangsfläche der Einzelmutter 16p eingefräste Teilausnehmung 34p geht in eine zweite in die Umfangsfläche der Einzelmutter 18p eingefräste Teilausnehmung 30p über. In die Ausnehmung 30p/34p wird ein im wesentlichen ebenes, flächiges Paßstück 32p eingelegt und dort befestigt. Gemäß Fig. 17 ist das Paßstück 32p an der Einzelmutter 16p mittels einer Schraube 36p gesichert. Die Schraube 36p greift dabei in eine Gewindebohrung ein, welche nach dem Fräsen der Ausnehmung 30p/34p in die Einzelmutter 16p eingebracht worden ist. Zusätzlich kann das Paßstück 32p auch mit der zweiten Teilausnehmung verschraubt sein. Zusätzlich oder alternativ ist ferner denkbar, das Paßstück 32p mit wenigstens einer der Teilausnehmungen 30p, 34p zu verkleben.

## Patentansprüche

1. Wälzkörpergewindetrieb (10a-10e, 10i, 10l-10o), insbesondere Kugelgewindetrieb, umfassend:
- eine Gewindespindel (12a) mit einer Spindelachse (S), und
- eine auf der Gewindespindel (12a) laufende Doppelmutter (14a - 14e, 14i, 14l - 14o) mit zwei voneinander gesondert ausgebildeten Einzelmuttern (16a - 16e, 16i, 16l - 16o, 18a - 18e, 18i, 18l - 18o), welche in Richtung der Spindelachse (S) starr miteinander verbunden sind,
- wobei die beiden Einzelmuttern (16a - 16e, 16i, 16l - 16o, 18a - 18e, 18i, 18l- 18o) zur Bereitstellung dieser starren Verbindung in Richtung der Spindelachse (S) aneinander unmittelbar oder mittels eines zwischen den beiden Einzelmuttem (16a - 16e, 16i, 16l - 16o, 18a - 18e, 18i, 18l - 18o) angeordneten Zwischenelements (28a, 28b, 28c, 28i) abgestützt sind, und
wobei die beiden Einzelmuttem (16a - 16e, 16i, 16l - 16o, 18a - 18e, 18i, 18l - 18o) zur Einstellung eines gewünschten Spiels bzw. einer gewünschten Vorspannung bezüglich der Gewindespindel (12a) kontinuierlich relativ zueinander um die Spindelachse (S) verdrehbar und in einer beliebigen dem gewünschten Spiel bzw. der gewünschten Vorspannung entsprechenden Relativdrehstellung festlegbar sind,
**dadurch gekennzeichnet, daß** eine erste (16a - 16e, 16i, 16l - 16o) der beiden Einzelmuttern oder das mit dieser verbundene Zwischenelement (28a - 28e, 28i, 28l - 28n) mit der zweiten Einzelmutter (18e, 18i, 18l, 18n, 18o) oder mit wenigstens einem mit dieser verbundenen Teil (42a, 42d) verschweißt ist.

2. Wälzkörpergewindetrieb nach Anspruch 1,
**dadurch gekennzeichnet, daß** die erste Einzelmutter (16d) oder das Zwischenelement (28a) mit wenigstens einem Paßteil (42a, 42d) verschweißt ist, das an der zweiten Einzelmutter (18a, 18d) lösbar befestigt ist, beispielsweise mittels eines Schraubbolzens (44a, 44d) mit dieser verschraubt ist.

3. Wälzkörpergewindetrieb nach Anspruch 2,
**dadurch gekennzeichnet, daß** der lichte Durchmesser des das Paßteil (42a, 42d) durchsetzenden Durchgangslochs (52a, 52d) größer ist als der Außendurchmesser des Schraubbolzens (44a, 44d) und daß das Durchgangsloch (52a, 52d) mit einem Innengewinde versehen ist.

4. Wälzkörpergewindetrieb nach Anspruch 2 oder 3,
**dadurch gekennzeichnet, daß** das Paßteil (42a, 42d) an der ersten Einzelmutter (16d) oder dem Zwischenelement (28a) längs einer vorbestimmten Strecke im wesentlichen bündig anliegt und vorzugsweise längs dieser gesamten Strecke mit der ersten Einzelmutter (16d) oder dem Zwischenelement (28a) verschweißt ist.

5. Wälzkörpergewindetrieb nach Anspruch 1,
**dadurch gekennzeichnet, daß** die erste Einzelmutter (16e, 16o) oder das Zwischenelement (28i, 28l, 28m) mit der zweiten Einzelmutter (18e, 18i, 18l, 18m, 18o) längs wenigstens eines Teils der, vorzugsweise längs im wesentlichen der gesamten, von außen sichtbaren Kontaktlinie (46e, 46i, 46l, 46m, 46o) zwischen diesen Bauteilen verschweißt ist.

6. Wälzkörpergewindetrieb nach einem der Ansprüche 1 bis 5,
**dadurch gekennzeichnet, daß** die erste Einzelmutter oder das Zwischenelement (28l) mit der zweiten Einzelmutter (18l) zusätzlich verklebt ist, vorzugsweise unter Einsatz eines doppelseitigen Klebebandes.

7. Wälzkörpergewindetrieb nach einem der Ansprüche 1 bis 6,
**dadurch gekennzeichnet, daß** das Zwischenelement (28d, 28e) einstückig an der ersten Einzelmutter (16d, 16e, 16h) angeformt ist.

8. Wälzkörpergewindetrieb nach einem der Ansprüche 1 bis 6,
**dadurch gekennzeichnet, daß** das Zwischenelement (28a, 28b, 28c, 28i, 28l, 28m, 28n) als von der ersten Einzelmutter (16a, 16b, 16c, 16i, 16l, 16m, 16n) gesondertes Element ausgebildet ist.

9. Wälzkörpergewindetrieb nach Anspruch 8,
**dadurch gekennzeichnet, daß** das Zwischenelement (28b) mit der ersten Einzelmutter (16b) durch Preßpassung verbunden ist.

10. Wälzkörpergewindetrieb nach Anspruch 6 oder 9,
**dadurch gekennzeichnet, daß** das Zwischenelement (28l) mit der ersten Einzelmutter (16l) verklebt ist, vorzugsweise unter Einsatz eines doppelseitigen Klebebands.

11. Wälzkörpergewindetrieb nach Anspruch 8,
**dadurch gekennzeichnet, daß** das Zwischenelement (28a) relativ zur ersten Einzelmutter (16a) durch wenigstens ein weiteres Paßteil (32a) drehfest gehalten ist, welches mit der ersten Einzelmutter (16b), verbunden oder einstückig ausgebildet ist und jeweils in eine am Zwischenelement (28a), vorgesehene Ausnehmung (30a) eingreift.

12. Wälzkörpergewindetrieb nach Anspruch 11,
**dadurch gekennzeichnet, daß** das weitere Paßteil als gesondertes Bauteil (32a) ausgebildet und an der ersten Einzelmutter (16a) lösbar befestigt ist, beispielsweise mittels eines Schraubbolzens (36a) mit dieser verschraubt ist.

13. Wälzkörpergewindetrieb nach Anspruch 12,
**dadurch gekennzeichnet, daß** der lichte Durchmesser des das weitere Paßteil (32a) durchsetzenden Durchgangslochs (48a) größer ist als der Außendurchmesser des Schraubbolzens (36a) und daß das Durchgangsloch (48a) mit einem Innengewinde versehen ist.

14. Wälzkörpergewindetrieb nach Anspruch 8,
**dadurch gekennzeichnet, daß** das Zwischenelement (28c) an der ersten Einzelmutter (16c) durch ein Gewinde (54c) gehalten ist, dessen Steigung oder/und Drehsinn sich von jenen der Gewindespindel unterscheidet.

15. Wälzkörpergewindetrieb nach Anspruch 8,
**dadurch gekennzeichnet, daß** das Zwischenelement (28i, 28l, 28m, 28n) mit der ersten Einzelmutter (16i, 16l, 16m, 16n) verschweißt ist.

16. Wälzkörpergewindetrieb nach Anspruch 15,
**dadurch gekennzeichnet, daß** das Zwischenelement (28i, 28l, 28m) mit der ersten Einzelmutter (16i, 16l, 16m) längs wenigstens eines Teils der, vorzugsweise längs im wesentlichen der gesamten, von außen sichtbaren Kontaktlinie (46i, 46l, 46m) zwischen diesen Bauteilen verschweißt ist.

17. Wälzkörpergewindetrieb nach einem der Ansprüche 1 bis 16,
**dadurch gekennzeichnet, daß** das Zwischenelement an wenigstens einer der Einzelmuttern, vorzugsweise beiden Einzelmuttern, oder daß die beiden Einzelmuttern relativ zueinander bezüglich der Spindelachse zentriert angeordnet ist bzw. sind.

18. Wälzkörpergewindetrieb nach einem der Ansprüche 1 bis 17,
**dadurch gekennzeichnet, daß** das Zwischenelement von einem geschlossenen Ringelement gebildet ist.

19. Wälzkörpergewindetrieb nach einem der Ansprüche 1 bis 17,
**dadurch gekennzeichnet, daß** das Zwischenelement (28l, 28m, 28n) von einem geschlitzten Ringelement gebildet ist.

20. Wälzkörpergewindetrieb nach Anspruch 19,
**dadurch gekennzeichnet, daß** die beiden an den Schlitz angrenzenden Endbereiche des Zwischenelements (28l, 28m, 28n) an wenigstens einer der beiden Einzelmuttern (16l, 16m, 16n, 18l, 18m, 18n) durch Schweißen festgelegt sind.

21. Wälzkörpergewindetrieb nach Anspruch 19 oder 20,
**dadurch gekennzeichnet, daß** der Schlitz des Zwischenelements (28m) mittels Schweißen geschlossen ist (bei 82m).

22. Wälzkörpergewindetrieb nach einem der Ansprüche 1 bis 21,
**dadurch gekennzeichnet, daß** das Zwischenelement (28i, 28l) einen Elastizitätsbereich (74i, 78l) aufweist, der ein Verkippen der beiden Einzelmuttern (16i und 18i, 16l und 18l) relativ zueinander um zur Spindelachse (S) im wesentlichen orthogonal verlaufende Achsen zuläßt.

23. Wälzkörpergewindetrieb nach einem der Ansprüche 1 bis 22,
**dadurch gekennzeichnet, daß** eines von zwei miteinander zu verbindenden Bauteilen, erste Einzelmutter oder Zwischenelement bzw. Zwischenelement oder zweite Einzelmutter bzw. eine der beiden Einzelmuttern, zumindest in einem zur Verbindung mit dem jeweils anderen Bauteil bestimmten Bereich aus weichem, d.h. nicht gehärtetem, und gewünschtenfalls schweißbarem Stahl gefertigt ist.

24. Wälzkörpergewindetrieb nach Anspruch 23,
**dadurch gekennzeichnet, daß** das eine Bauteil aus einem Stahl mit niedrigem Kohlenstoff-Gehalt gefertigt ist.

25. Wälzkörpergewindetrieb nach einem der Ansprüche 1 bis 24,
**dadurch gekennzeichnet, daß** wenigstens eine der beiden Einzelmuttern eine gehärtete Spindellauffläche aufweist, die von einem äußeren, nicht gehärteten Mantelbereich umgeben ist.

26. Wälzkörpergewindetrieb nach Anspruch 25,
**dadurch gekennzeichnet, daß** wenigstens eine der beiden Einzelmuttern eine einsatzgehärtete Einzelmutter ist, d.h. eine Einzelmutter, deren gehärtete Spindellauffläche von einem nicht gehärteten, äußeren Mantelbereich aus einem Stahl mit niedrigem Kohlenstoff-Gehalt umgeben ist.

27. Wälzkörpergewindetrieb nach Anspruch 26,
**dadurch gekennzeichnet, daß** wenigstens eine der beiden Einzelmuttern eine induktionsgehärtete Einzelmutter ist, d.h. eine Einzelmutter, deren gehärtete Spindellauffläche von einem nicht gehärteten, äußeren Mantelbereich aus einem Stahl mit hohem Kohlenstoff-Gehalt umgeben ist.

28. Wälzkörpergewindetrieb nach einem der Ansprüche 1 bis 27,
**dadurch gekennzeichnet, daß** die beiden miteinander verbundenen Bauteile (16o, 18o) mittels wenigstens einer V-Schweißstelle bzw. V-Schweißnaht (46o) verschweißt sind.

29. Wälzkörpergewindetrieb nach Anspruch 28,
**dadurch gekennzeichnet, daß** die beiden miteinander zu verschweißenden Bauteile (16o, 18o) in dem für das Veschweißen vorgesehenen Bereich angefast sind.

30. Wälzkörpergewindetrieb nach einem der Ansprüche 1 bis 29,
**dadurch gekennzeichnet, daß** wenigstens eine Schweißstelle oder/und Schweißnaht (46o) mittels eines Abdeckrings (92o) überdeckt ist.

31. Wälzkörpergewindetrieb nach Anspruch 30,
**dadurch gekennzeichnet, daß** der Abdeckring (92o) aus Kunststoff oder Metall gefertigt ist.

32. Wälzkörpergewindetrieb nach Anspruch 30 oder 31,
**dadurch gekennzeichnet, daß** der Abdeckring (92o) auf die Doppelmutter (14o), beispielsweise durch Kleben, befestigt oder auf den Doppelmutter (14o) aufgeklipst ist.

33. Wälzkörpergewindetrieb nach den Ansprüchen 2 und 11,
**dadurch gekennzeichnet, daß** das eine Paßteil (42a) und das weitere Paßteil (32a) identisch ausgebildet sind.

34. Verfahren zum Montieren eines Wälzkörpergewindetriebs insbesondere Kugelgewindetriebs, nach einem der vorhergehenden Ansprüche, bei welchem die beiden Einzelmuttern zur Einstellung eines gewünschten Spiels bzw. einer gewünschten Vorspannung durch Verdrehen auf der Gewindespindel (12a) in gegenseitige Anlage gebracht und in einer dem gewünschten Spiel bzw. der gewünschten Vorspannung entsprechenden Relativdrehstellung drehfest miteinander verbunden werden,
**dadurch gekennzeichnet, daß** eine erste der beiden Einzelmuttern oder ein mit dieser verbundenes, zwischen den beiden Einzelmuttern angeordnetes Zwischenelement zur Fixierung der Relativdrehstellung der beiden Einzelmuttern
mit der zweiten Einzelmutter (18e, 18i, 18l, 18m, 18n, 18o) oder mit wenigstens einem mit dieser verbundenen Teil (42a, 42d) verschweißt wird.

## Claims

1. Rolling element screw drive (10a - 10e, 10i, 10l - 10o), in particular a ball screw drive, comprising:
- a screw spindle (12a) with a spindle axis (S), and
- a double nut (14a - 14e, 14i, 14l - 14o) running on the screw spindle (12a) with two separately configured single nuts (16a - 16e, 16i, 16l - 16o, 18a - 18e, 18i, 18l - 18o), which are rigidly connected to each other in the direction of the spindle axis (S)
- the two single nuts (16a - 16e, 16i, 16l - 16o, 18a - 18e, 18i, 18l - 18o), in order to produce this rigid connection, being supported on each other in the direction of the spindle axis (S), either directly or by means of an intermediate element (28a, 28b, 28c, 28i) arranged between the two single nuts (16a - 16e, 16i, 16l - 16o, 18a - 18e, 18i, 18l - 18o), and
- the two single nuts (16a - 16e, 16i, 16l - 16o, 18a - 18e, 18i, 18l - 18o), in order to set a desired play or a desired bias in respect of the screw spindle (S), being continuously rotatable relative to each other about the spindle axis (S) and being able to be fixed in any relative rotary position corresponding to the desired play or the desired bias;
**characterised in that** a first (16a - 16e, 16i, 16l - 16o) of the two single nuts or the intermediate element (28a - 28e, 28i, 28l - 28n) connected thereto is welded to the second single nut (18e, 18i, 18n, 18o) or to at least one part (42a, 42d) connected thereto.

2. Rolling element screw drive according to claim 1, **characterised in that** the first single nut (16d) or the intermediate element (28a) is welded to at least one fitting part (42a, 42d), which is detachably fastened, for example screwed by means of a screw bolt (44a, 44d), to the second single nut (18a, 18d).

3. Rolling element screw drive according to claim 2, **characterised in that** the inside diameter of the through-hole (52a, 52d) penetrating the fitting part (42a, 42d) is larger than the outside diameter of the screw bolt (44a, 44d), and that the through-hole (52a, 52d) is provided with an internal screw thread.

4. Rolling element screw drive according to either of claims 2 and 3, **characterised in that** the fitting part (42a, 42d) lies substantially flush against the first single nut (16d) or the intermediate element (28a) along a predetermined distance, and is preferably welded over this entire distance to the first single nut (16d) or the intermediate element (28a).

5. Rolling element screw drive according to claim 1, **characterised in that** the first single nut (16e, 16o) or the intermediate element (28i, 28l, 28m) is welded to the second single nut (18e, 18i, 18l, 18m, 18o) along at least a part, preferably along substantially the whole, of the outwardly visible contact line (46e, 46i, 46l, 46m, 46o) between these components.

6. Rolling element screw drive according to any of claims 1 to 5, **characterised in that** the fist single nut or the intermediate element (28l) is additionally glued, preferably using a double-sided adhesive tape, to the second single nut (18l).

7. Rolling element screw drive according to any of claims 1 to 6, **characterised in that** intermediate element (28d, 28e) is moulded onto the first single nut (16d, 16e, 16h) in a single piece.

8. Rolling element screw drive according to any of claims 1 to 6, **characterised in that** the intermediate element (28a, 28b, 28c, 28i, 28l, 28m, 28n) is configured as a separate element from the first single nut (16a, 16b, 16c, 16i, 16l, 16m, 16n).

9. Rolling element screw drive according to claim 8, **characterised in that** the intermediate element (28b) is connected to the first single nut (16b) by press-fitting.

10. Rolling element screw drive according to either of claims 6 and 9, **characterised in that** intermediate element (28l) is glued, preferably using a double-sided adhesive tape, to the first single nut (16l).

11. Rolling element screw drive according to claim 8, **characterised in that** the intermediate element (28a) is held non-rotatably relative to the first single nut (16a) by at least one further fitting part (32a), which is connected to, or configured as a single piece with, the first single nut (16b) and respectively engages with a recess (30a) provided on the intermediate element (28a).

12. Rolling element screw drive according to claim 11, **characterised in that** the further fitting part is configured as a separate component (32a) and detachably fastened, for example screwed by means of a screw bolt (36a), to the first single nut (16a).

13. Rolling element screw drive according to claim 12, **characterised in that** the internal diameter of the through-hole (48a) penetrating the further fitting part (32a) is larger than the external diameter of the screw bolt (36a), and that the through-hole (48a) is provided with an internal screw thread.

14. Rolling element screw drive according to claim 8, **characterised in that** the intermediate element (28c) is held on the first single nut (16c) by a screw thread (54c), the lead and/or direction of rotation of which differ(s) from that/those of the screw spindle.

15. Rolling element screw drive according to claim 8, **characterised in that** the intermediate element (28i, 28l, 28m, 28n) is welded to the first single nut (16i, 16l, 16m, 16n).

16. Rolling element screw drive according to claim 15, **characterised in that** the intermediate element (28i, 28l, 28m) is welded to the first single nut (16i, 16l, 16m) along at least a part, preferably along substantially the whole, of the outwardly visible contact line (46i, 46l, 46m) between these components.

17. Rolling element screw drive according to any of claims 1 to 16, **characterised in that** the intermediate element on at least one of the single nuts, preferably on both single nuts, is arranged centred in respect of the spindle axis, or that the two single nuts are arranged centred relative to each other in respect of the spindle axis.

18. Rolling element screw drive according to any of claims 1 to 17, **characterised in that** the intermediate element is formed by a closed ring element.

19. Rolling element screw drive according to any of claims 1 to 17, **characterised in that** the intermediate element (28l, 28m, 28n) is formed by a slotted ring element.

20. Rolling element screw drive according to claim 19, **characterised in that** the two end regions of the intermediate element (28l, 28m, 28n) adjoining the slot are fixed to at least one of the two single nuts (16l, 16m, 16n, 18l, 18m, 18n) by welding.

21. Rolling element screw drive according to either of claims 19 and 20, **characterised in that** the slot of the intermediate element (28m) is closed by welding (in 82m).

22. Rolling element screw drive according to any of claims 1 to 21, **characterised in that** the intermediate element (28i, 28l) has an elastic region that allows the two single nuts (16i and 18i, 16l and 18l) to tilt relative to each other about axes extending substantially orthogonally to the spindle axis (S).

23. Rolling element screw drive according to any of claims 1 to 22, **characterised in that** one of two components to be connected to each other, first single nut or intermediate element, or intermediate element or second single nut, or one of the two single nuts, is made, at least in a region determined for connection to the respective other component, of soft, i.e. non-hardened, and optionally weldable steel.

24. Rolling element screw drive according to claim 23, **characterised in that** the one component is made of steel with a low carbon content.

25. Rolling element screw drive according to any of claims 1 to 24, **characterised in that** at least one of the two single nuts comprises a hardened spindle surface that is surrounded by an outer, non-hardened casing region.

26. Rolling element screw drive according to claim 25, **characterised in that** at least one of the two single nuts is a case-hardened single nut, i.e. a single nut, the hardened spindle surface of which is surrounded by a non-hardened, outer casing region made of steel with a low carbon content.

27. Rolling element screw drive according to claim 26, **characterised in that** at least one of the two single nuts is an induction-hardened single nut, i.e. a single nut, the hardened spindle surface of which is surrounded by a non-hardened, outer casing region made of steel with a high carbon content.

28. Rolling element screw drive according to any of claims 1 to 27, **characterised in that** the two components (16o, 18o) connected to each other are welded by means of at least one V-weld point or V-weld seam (46o).

29. Rolling element screw drive according to claim 28, **characterised in that** the two components (16o, 18o) to be welded to each other are chamfered in the region provided for welding.

30. Rolling element screw drive according to any of claims 1 to 29, **characterised in that** at least one weld point and/or weld seam (46o) is/are covered by means of a covering ring (92o).

31. Rolling element screw drive according to claim 30, **characterised in that** the covering ring (92o) is made of plastics material or metal.

32. Rolling element screw drive according to either of claims 30 and 31, **characterised in that** the covering ring (92o) is fastened, for example through adhesion, to the double nut (14o) or is clipped onto the double nut (14o).

33. Rolling element screw drive according to claims 2 and 11, **characterised in that** one fitting part (42a) and the further fitting part (32a) are identically configured.

34. Method of assembling a rolling element screw drive, in particular a ball screw drive, according to any of the preceding claims, wherein, in order to set a desired play or a desired bias, the two single nuts are brought into mutual abutment by being rotated on the screw spindle (12a) and are non-rotatably connected to each other in a relative rotary position corresponding to the desired play or the desired bias, **characterised in that**, in order to fix the relative rotary position of the two single nuts, a first of the two single nuts or an intermediate element connected thereto and arranged between the two single nuts is welded to the second single nut (18e, 18i, 18l, 18m, 18n, 18o) or to at least one part (42a, 42d) connected thereto.

## Revendications

1. Vis d'entraînement avec corps rotatifs (10a-10e, 10i, 10l-10o), en particulier vis d'entraînement à billes, comprenant :
- une broche filetée (12a) avec un axe de broche (S), et
- un double écrou (14a-14e, 14i, 14l-14o), mobile sur la broche filetée (12a) et formé par deux écrous individuels (16a-16e, 16i, 16l-16o, 18a-18e, 18i, 18l-180) séparément l'un de l'autre et assemblés de manière rigide l'un à l'autre dans le sens de l'axe (S) de la broche,
- dans laquelle, pour réaliser cet assemblage rigide dans le sens de l'axe (S) de la broche, les deux écrous individuels (16a-16e, 16i, 16l-16o, 18a-18e, 18i, 18l-18o) sont en appui directement l'un contre l'autre ou au moyen d'un élément intermédiaire (28a, 28b, 28c, 28i), agencé entre les deux écrous individuels (16a-16e, 16i, 16l-16o, 18a-18e, 18i, 18l-18o), et
- dans laquelle, pour le réglage d'un jeu souhaité ou d'une précontrainte souhaitée par rapport à la broche filetée (12a), les deux écrous individuels (16a-16e, 16i, 16l-16o, 18a-18e, 18i, 18l-18o) peuvent être entraînés en rotation en continu l'un par rapport à l'autre autour de l'axe (S) de la broche et peuvent être bloqués dans une quelconque position relative de rotation correspondant au jeu souhaité ou à la précontrainte souhaitée,
**caractérisée en ce qu'**un premier écrou individuel (16a-16e, 16i, 16l-16o) des deux écrous individuels ou l'élément intermédiaire (28a-28e, 28i, 28l-28n), assemblé à celui-ci, est soudé avec le deuxième écrou individuel (18e, 18i, 18l, 18n, 18o) ou avec au moins un élément (42a, 42d) assemblé à celui-ci.

2. Vis d'entraînement avec corps rotatifs selon la revendication 1, **caractérisée en ce que** le premier écrou individuel (16d) ou l'élément intermédiaire (28a) est soudé avec au moins un élément de réglage (42a, 42d), qui est fixé de manière amovible sur le deuxième écrou individuel (18a, 18d), par exemple est vissé à celui-ci au moyen d'un boulon fileté (44a, 44d).

3. Vis d'entraînement un corps rotatifs selon la revendication 2, **caractérisée en ce que** le diamètre intérieur du trou débouchant (52a, 52d), à travers lequel passe l'élément de réglage (42a, 42d), est supérieur au diamètre extérieur du boulon fileté (44a, 44d) et **en ce que** le trou débouchant (52a, 52d) est muni d'un taraudage.

4. Vis d'entraînement avec corps rotatifs selon la revendication 2 ou 3, **caractérisée en ce que** l'élément de réglage (42a, 42d) est en appui contre le premier écrou individuel (16d) ou l'élément intermédiaire (28a), sensiblement en surface affleurée le long d'une distance prédéfinie et, de préférence, est soudé le long de cette distance totale avec le premier écrou individuel (16d) ou l'élément intermédiaire (28a).

5. Vis d'entraînement avec corps rotatifs selon la revendication 1, **caractérisée en ce que** le premier écrou individuel (16e, 16o) ou l'élément intermédiaire (28i, 28l, 28m) est soudé avec le deuxième écrou individuel (18e, 18i, 18l, 18m, 18o) le long d'au moins une partie de la ligne de contact (46e, 46i, 46l, 46m, 46o), de préférence sensiblement le long de toute ladite ligne de contact, visible de l'extérieur, entre ces éléments.

6. Vis d'entraînement avec corps rotatifs selon l'une des revendications 1 à 5, **caractérisée en ce que** le premier écrou individuel ou l'élément intermédiaire (28l) est en plus collé contre le deuxième écrou individuel (18l), de préférence par l'utilisation d'une bande adhésive double face.

7. Vis d'entraînement avec corps rotatifs selon l'une des revendications 1 à 6, **caractérisée en ce que** l'élément intermédiaire (28d, 28e) est formé d'une seule pièce sur le premier écrou individuel (16d, 16e, 16h).

8. Vis d'entraînement avec corps rotatifs selon l'une des revendications 1 à 6, **caractérisée en ce que** l'élément intermédiaire (28a, 28b, 28c, 28i, 28l, 28m, 28n) est réalisé sous forme d'élément séparé du premier écrou individuel (16a, 16b, 16c, 16i, 16l, 16m, 16n).

9. Vis d'entraînement avec corps rotatifs selon la revendication 8, **caractérisée en ce que** l'élément intermédiaire (28b) est assemblé avec le premier écrou individuel (16b) par un ajustage serré.

10. Vis d'entraînement avec corps rotatifs selon la revendication 6 ou 9, **caractérisée en ce que** l'élément intermédiaire (28l) est collé contre le premier écrou individuel (16l), de préférence par l'utilisation d'une bande adhésive double face.

11. Vis d'entraînement avec corps rotatifs selon la revendication 8, **caractérisée en ce que** l'élément intermédiaire (28a) est maintenu solidaire en rotation par rapport au premier écrou individuel (16a) par au moins un élément de réglage (32a) supplémentaire, qui est assemblé ou réalisé d'une seule pièce avec le premier écrou individuel (16b) et qui s'engage respectivement dans un évidement (30a) prévu au niveau de l'élément intermédiaire (28a).

12. Vis d'entraînement avec corps rotatifs selon la revendication 11, **caractérisée en ce que** l'élément de réglage supplémentaire est réalisé sous forme d'élément séparé (32a) et est fixé de manière amovible sur le premier écrou individuel (16a), par exemple est vissé à celui-ci au moyen d'un boulon fileté (36a).

13. Vis d'entraînement avec corps rotatifs selon la revendication 12, **caractérisée en ce que** le diamètre intérieur du trou débouchant (48a), à travers lequel passe l'élément de réglage (32a) supplémentaire, est supérieur au diamètre extérieur du boulon fileté (36a) et **en ce que** le trou débouchant (48a) est muni d'un taraudage.

14. Vis d'entraînement avec corps rotatifs selon la revendication 8, **caractérisée en ce que** l'élément intermédiaire (28c) est maintenu sur le premier écrou individuel (16c) par un filetage (54c), dont le pas de vis et/ou le sens de rotation se différencie de celui de la broche filetée.

15. Vis d'entraînement avec corps rotatifs selon la revendication 8, **caractérisée en ce que** l'élément intermédiaire (28i, 28l, 28m, 28n) est soudé au premier écrou individuel (16i, 16l, 16m, 16n).

16. Vis d'entraînement avec corps rotatifs selon la revendication 15, **caractérisée en ce que** l'élément intermédiaire (28i, 28l, 28m) est soudé au premier écrou individuel (16i, 16l, 16m) le long d'au moins une partie de la ligne de contact (46i, 46l, 46m), de préférence sensiblement le long de toute ladite ligne de contact, visible de l'extérieur, entre ces éléments.

17. Vis d'entraînement avec corps rotatifs selon l'une des revendications 1 à 16, **caractérisée en ce que** l'élément intermédiaire est assemblé sur au moins un des écrous individuels, de préférence les deux écrous individuels, ou **en ce que** les deux écrous individuels sont agencés l'un par rapport à l'autre de manière centrée par rapport à l'axe de la broche.

18. Vis d'entraînement avec corps rotatifs selon l'une des revendications 1 à 17, **caractérisée en ce que** l'élément intermédiaire est formé par un élément annulaire fermé.

19. Vis d'entraînement avec corps rotatifs selon l'une des revendications 1 à 17, **caractérisée en ce que** l'élément intermédiaire (28l, 28m, 28n) est formé par un élément annulaire fendu.

20. Vis d'entraînement avec corps rotatifs selon la revendication 19, **caractérisée en ce que** les deux extrémités de l'élément intermédiaire (28l, 28m, 28n), contiguës à la fente, sont fixées par soudage sur au moins l'un des deux écrous individuels (16l, 16m, 16n, 18l, 18m, 18n).

21. Vis d'entraînement avec corps rotatifs selon la revendication 19 ou 20, **caractérisée en ce que** la fente de l'élément intermédiaire (28m) est fermée (en 82m) par soudage.

22. Vis d'entraînement avec corps rotatifs selon l'une des revendications 1 à 21, **caractérisée en ce que** l'élément intermédiaire (28i, 28l) comporte une zone élastique (74i, 78l), qui autorise un basculement des deux écrous individuels (16i et 18i, 16l et 18l) l'un par rapport à l'autre autour d'axes sensiblement perpendiculaires à l'axe (S) de la broche.

23. Vis d'entraînement avec corps rotatifs selon l'une des revendications 1 à 22, **caractérisée en ce que** l'un de deux éléments à assembler l'un à l'autre, à savoir le premier écrou individuel ou l'élément intermédiaire, ou bien l'élément intermédiaire ou le deuxième écrou individuel, ou bien l'un des deux écrous individuels, dans au moins une partie déterminée pour l'assemblage de l'un avec l'autre élément, sont réalisés en acier doux, c'est-à-dire non trempé, et, le cas échéant, soudable.

24. Vis d'entraînement avec un corps rotatif selon la revendication 23, **caractérisée en ce que** l'un des éléments est réalisé dans un acier avec une faible teneur en carbone.

25. Vis d'entraînement avec corps rotatifs selon l'une des revendications 1 à 24, **caractérisée en ce qu'**au moins l'un des deux écrous individuels comporte une surface de déplacement sur la broche, qui est réalisée en matériau trempé et qui est entourée par une enveloppe extérieure non trempée.

26. Vis d'entraînement avec corps rotatifs selon la revendication 25, **caractérisée en ce qu'**au moins l'un des deux écrous individuels est un écrou durci par cémentation, c'est-à-dire un écrou dont la surface de déplacement sur la broche, réalisée en matériau trempé, est entourée par une enveloppe extérieure non trempée réalisée dans un acier à faible teneur en carbone.

27. Vis d'entraînement avec corps rotatifs selon la revendication 26, **caractérisée en ce qu'**au moins l'un des deux écrous individuels est un écrou durci par induction, c'est-à-dire un écrou dont la surface de déplacement sur la broche, réalisée en matériau trempé, est entourée par une enveloppe extérieure non trempée réalisée dans un acier à teneur élevée en carbone.

28. Vis d'entraînement avec corps rotatifs selon l'une des revendications 1 à 27, **caractérisée en ce que** les deux éléments (16o, 18o), assemblés l'un à l'autre, sont soudés l'un à l'autre par au moins une zone de soudure en V ou un cordon de soudure en V (46o).

29. Vis d'entraînement avec corps rotatifs selon la revendication 28, **caractérisée en ce que** les deux éléments (16o, 18o) à souder l'un à l'autre sont chanfreinés dans la partie prévue pour le soudage.

30. Vis d'entraînement avec corps rotatifs selon l'une des revendications 1 à 29, **caractérisée en ce qu'**au moins une zone de soudure et/ou le cordon de soudure (46o) est masqué par une bague de protection (92o).

31. Vis d'entraînement avec corps rotatifs selon la revendication 30, **caractérisée en ce que** la bague de protection (92o) est réalisée en matière plastique ou en métal.

32. Vis d'entraînement avec corps rotatifs selon la revendication 30 ou 31, **caractérisée en ce que** la bague de protection (92o) est fixée, par collage par exemple, sur le double écrou (14o) ou est clipsée sur le double écrou (14o).

33. Vis d'entraînement avec corps rotatifs selon les revendications 2 et 11, **caractérisée en ce que** l'élément de réglage (42a) et l'élément de réglage (32a) supplémentaire sont réalisés de manière identique.

34. Procédé de montage d'une vis d'entraînement avec corps rotatifs, en particulier une vis d'entraînement à billes, selon l'une des revendications précédentes, dans lequel, pour le réglage d'un jeu souhaité ou d'une précontrainte souhaitée, les deux écrous individuels sont amenés en appui réciproque par rotation sur la broche filetée (12a) et sont assemblés l'un à l'autre de manière solidaire en rotation dans une position relative de rotation correspondant au jeu souhaité ou à la précontrainte souhaitée, **caractérisé en ce que**, pour le blocage de la position relative de rotation des deux écrous individuels, un premier écrou des deux écrous individuels ou un élément intermédiaire, assemblé avec celui-ci et agencé entre les deux écrous individuels, est soudé avec le deuxième écrou individuel (18e, 18i, 18l, 18m, 18n, 18o) ou avec au moins un élément (42a, 42d) assemblé à celui-ci.
